# EUROPEAN PATENT APPLICATION

(11) **EP 4 645 252 A1**
(43) Date of publication of application: **05.11.2025**
(21) Application number: 24173584.4
(22) Date of filing: 30.04.2024
(51) Int. Cl.: G06V 10/774, G06T 7/00, G06V 10/82, G06V 10/98, G06V 20/69

(54) **ATTENTION-BASED METHODS AND SYSTEMS FOR IMPROVING QUALITY CONTROL OF WHOLE-SLIDE IMAGE PREDICTIONS**

(71) Applicant: Tempus AI, Inc., Chicago, IL 60654 (US)
(72) Inventor: NAGPAL, Kunal, New York City, 11211 (US); SCHAU, Geoffrey, Portland, 97209 (US); HAJI MAGHSOUDI, Omid, Reston, 20191 (US)
(74) Representative: Hofmann, Matthias

(57) **Abstract**

A method involves receiving a whole-slide image, processing it with a machine learning model to generate a prediction, determining attention scores for image tiles, selecting a subset based on these scores, generating a pass/fail indication. A system includes processors and memory to perform these steps. A non-transitory computer-readable medium contains instructions for executing these processes.

## Description

### FIELD

The present disclosure is directed to methods and systems for improving quality control of whole-slide image prediction, and more particularly, for processing whole-slide images using one or more machine learning (ML) models and generating pass/fail indications based on aggregated attention scores.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Images of Hematoxylin and Eosin (H&E) stained digital images are generally high resolution images that pathologists review (e.g., for diagnostic purposes). Because these images are high resolution, they are much more detailed and larger (in byte size) than the digital images humans review in day-to-day life. Thus, review for accurate diagnoses is a time-consuming process. In general, the process of analyzing H&E images for diagnosis is known as whole slide analysis.

In recent years, machine learning has gained popularity as a technique for training models to review large digital image files to make diagnostic predictions. Machine learning models may provide valuable outputs in the sense that a human can review the output and evaluate the overall output of the model for diagnostic purposes. This may reduce the amount of time needed for manual image review. Nevertheless, humans may lack any understanding of how these models reached their conclusions. Furthermore, such models may generate the right results for the wrong reasons (for example, a model result may be caused by analyzing a part of the slide that is biologically irrelevant), and/or the wrong results for the wrong reasons.

Accordingly, there is an opportunity for improved whole slide image quality control platforms and technologies.

### SUMMARY

In one aspect, a computer-implemented method of performing quality control prediction technique for a whole-slide image includes: (1) receiving, via one or more processors, the whole-slide image, wherein the whole-slide image is subdivided into a grid including a plurality of image tiles; (2) processing, via one or more processors, the whole-slide image using a trained machine learning model to generate a prediction based on the plurality of image tiles; (3) determining, based on an artificial neural network, a respective attention score for each of the plurality of image tiles; (4) generating a pass/fail indication corresponding to the prediction by selecting a subset of the plurality of image tiles based on the respective attention score of each of the subset of the plurality of image tiles; and (5) processing the selected subset of image tiles to determine their biological relevance to the prediction.

In another aspect, a computing system for performing quality control prediction technique for a whole-slide image includes: (1) one or more processors; and (2) a memory that includes instructions that, when executed by the one or more processors, cause the computing system to: (a) receive the whole-slide image, wherein the whole-slide image is subdivided into a grid including a plurality of image tiles; (b) process the whole-slide image using a trained machine learning model to generate a prediction based on the plurality of image tiles; (c) determine, based on an artificial neural network, a respective attention score for each of the plurality of image tiles; (d) generate a pass/fail indication corresponding to the prediction by selecting a subset of the plurality of image tiles based on the respective attention score of each of the subset of the plurality of image tiles; and (e) process the selected subset of image tiles to determine their biological relevance to the prediction.

In yet another aspect, a non-transitory computer-readable medium containing program instructions that when executed by one or more processors, cause a computer to: (1) receive the whole-slide image, wherein the whole-slide image is subdivided into a grid including a plurality of image tiles; (2) process the whole-slide image using a trained machine learning model to generate a prediction based on the plurality of image tiles; (3) determine, based on an artificial neural network, a respective attention score for each of the plurality of image tiles; (4) generate a pass/fail indication corresponding to the prediction by selecting a subset of the plurality of image tiles based on the respective attention score of each of the subset of the plurality of image tiles; and (5) process the selected subset of image tiles to determine their biological relevance to the prediction.

Advantages will become more apparent to those of ordinary skill in the art from the following description of the preferred embodiments which have been shown and described by way of illustration. As will be realized, the present embodiments may be capable of other and different embodiments, and their details are capable of modification in various respects. Accordingly, the drawings and description are to be regarded as illustrative in nature and not as restrictive.

### BRIEF DESCRIPTION OF THE DRAWINGS

The figures described below depict various aspects of the system and methods disclosed herein. It should be understood that each figure depicts an example of aspects of the present systems and methods.
FIG. 1 depicts an exemplary computing environment in which the techniques disclosed herein may be implemented, according to some aspects.
FIG. 2A depicts a conventional instance-based deep multiple instance learning network, according to some aspects.
FIG. 2B depicts a conventional embedding-based deep multiple instance learning network, according to some aspects.
FIG. 2C depicts a conventional deep multiple instance learning network with attention pooling, according to some aspects.
FIG. 3 depicts an exemplary flow diagram of an attention network-based quality control method, according to some aspects.
FIG. 4A depicts example histology slides depicting artifacts, according to some aspects.
FIG. 4B depicts an exemplary histology training image for simulating artifact effects on predictions, according to some aspects.
FIG. 4C depicts an exemplary computer-implemented method for simulating artifact effects on predictions, according to some aspects.
FIG. 4D depicts an exemplary chart depicting results of empirical testing using the method of FIG. 4C, according to some aspects.
FIG. 5A depicts an exemplary chart depicting, for each tumor percent range or stratum(final tumor percentage by sample count), what portion of the specimens have an microsatellite instable (MSI) vs. microsatellite stable (MSS) status according to some aspects.
FIG. 5B depicts an exemplary chart depicting AUC by tumor percent strata, according to some aspects.
FIG. 5C depicts an exemplary chart depicting ROC by tumor percent strata, according to some aspects.
FIG. 5D depicts a block diagram of an exemplary computer-implemented method for evaluating model performance conditioned on tumor detection performance to inform inclusion/exclusion criteria for MSI deployment, according to some aspects.
FIG. 5E depicts exemplary results showing predictive performance in synthetic alterations.
FIG. 6A depicts a block diagram of an example patient data cohort, according to some aspects.
FIG. 6B depicts an exemplary STARD diagram of the patient data cohort of FIG. 6A, according to some aspects.
FIG. 6C depicts an exemplary block diagram of a method for training and/or operating an histopathology slide predictor of MSI status, using the patient cohort data 600, according to some aspects.
FIGs. 6D depicts tiles selected using the trained model, according to some aspects.
FIGs. 6E depicts tiles selected using the trained model, according to some aspects.
FIGs. 6F depicts tiles selected using the trained model, according to some aspects.
FIG. 6G depicts a paired validation set, according to some aspects.
FIG. 6H depicts receiver operating characteristic (ROC) curve for an MSI-H predictor on the paired validation set and temporal validation set, according to some aspects.
FIG. 6I depicts ROC curves of prediction scores for various clinical subgroups, according to some aspects.
FIG. 6J depicts violin plots of prediction scores for various clinical subgroups, according to some aspects, having the P-value annotation legend of: ns: p ≤ 1, *: 0.01 < p ≤ 0.5, **: 0.001 < p ≤ 0.01, ***: 0.0001 < p ≤ 0.001, ****: p ≤ 0.0001.

### DETAILED DESCRIPTION

### Overview

An imaging-based biomarker prediction system is formed of a deep learning framework configured and trained to directly learn from histopathology slides and predict the presence of biomarkers in medical images. The deep learning frameworks may be configured and trained to analyze medical images and identify biomarkers that indicate the presence of a tumor, a tumor state/condition, or information about a tumor of the tissue sample.

The present aspects may relate to, *inter alia,* methods and systems improving quality control of whole-slide image prediction, and more particularly, for processing whole-slide images using one or more machine learning (ML) models and generating pass/fail indications based on aggregated attention scores.

The present techniques may be used in conjunction with techniques (e.g., multiscale models, single scale models, tumor-infiltrating lymphocyte models, etc.) such as those described in U.S. Patent No. 11,610,307, entitled "Determining Biomarkers from Histopathology Slide Images," herein incorporated by reference in its entirety, for all purposes.

It should be noted that the techniques previously disclosed may include quality control (QC) techniques for analyzing an entire histopathology image. In contrast, the present techniques are directed to training the model itself to identify which image tiles the model gave its attention to and performing QC on those tiles alone instead of the entire image.

In general, the present techniques include applying multiple instance learning models to histopathology slides, by tiling the histopathology slide images into image tiles, producing predictions or embeddings for each tile, and then aggregating the predictions or embeddings in a weighted manner via "attention" weights to issue overall slide-level predictions. These predictions may be subject to review by a human, ML or rule-based system, and fine tuning of thresholds may be performed to ensure the validity and usefulness of results.

### Exemplary Computing Environments

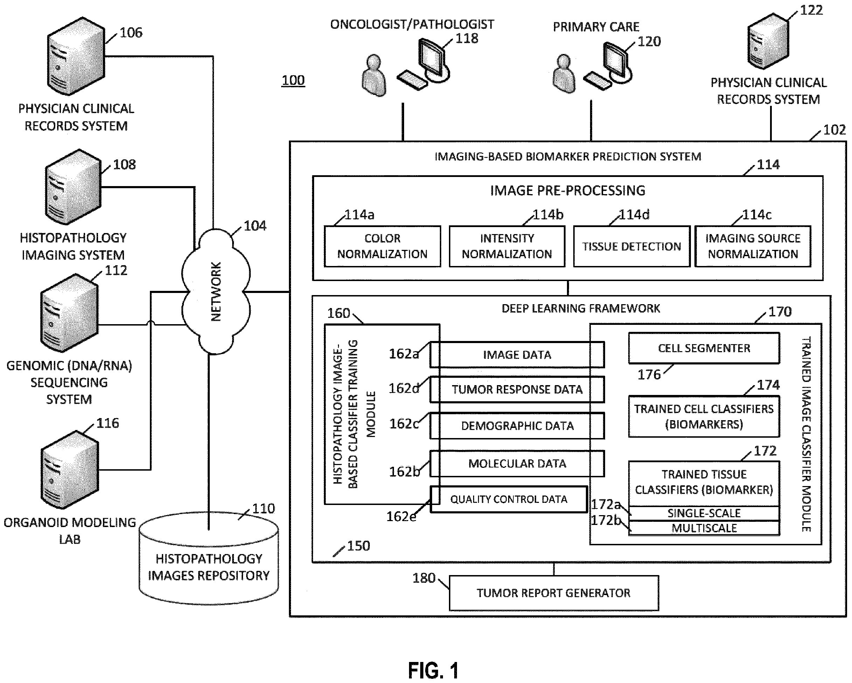

FIG. 1 illustrates a prediction system 100 capable of analyzing digital images of histopathology slides of a tissue sample and determining the likelihood of biomarker presence in that tissue, where biomarker presence indicates a predictive tumor presence, a predicted tumor state/condition, or other information about a tumor of the tissue sample, such as a possibility or likelihood of clinical response through the use of a treatment associated with the biomarker. FIG. 1 exemplifies a system upon which the present techniques may be performed to achieve quality control pass/fail characteristics.

The system 100 includes an imaging-based biomarker prediction system 102 that implements, *inter alia,* image processing operations, deep learning frameworks, report generating operations to analyze histopathology images of tissue samples and predict the presence of biomarkers in the tissue samples, etc.. In various examples, the system 100 is configured to predict the presence of these biomarkers, tissue location(s) associated with these biomarkers, and/or cellular locations of these biomarkers.

The imaging-based biomarker prediction system 102 may be implemented on one or more computing device, such as a computer, tablet or other mobile computing device, or server, such as a cloud server. The imaging-based biomarker prediction system 102 may include a number of processors, controllers or other electronic components for processing or facilitating image capture, generation, or storage and image analysis, and deep learning tools for analysis of images, as described herein.

As illustrated in FIG. 1, the imaging-based biomarker prediction system 102 may be connected to one or more medical data sources via an electronic network 104. The network 104 may be a public network such as the Internet, a private network such as a research institution or corporation private network, and/or any combination thereof. The network 104 may include a local area network (LAN), a wide area network (WAN), a cellular network, a satellite network, and/or other network infrastructure, whether wireless or wired.

The network 104 can be coupled to and/or part of a cloud-based platform (e.g., a cloud computing infrastructure). The network 104 may utilize communications protocols, including packet-based and/or datagram-based protocols such as Internet protocol (IP), transmission control protocol (TCP), user datagram protocol (UDP), and/or other types of protocols. Moreover, the network 104 may include one or more devices that facilitate network communications and/or form a hardware basis for the networks, such as one or more switches, one or more routers, one or more gateways, one or more access points (such as a wireless access point), one or more firewalls, one or more base stations, one or more repeaters, one or more backbone devices, etc.

Via the network 104, the imaging-based biomarker prediction system 102 may be communicatively coupled to receive medical images, for example including histopathology slides such as digital H&E stained slide images, immunohistochemistry (IHC) stained slide images, and/or digital images of any other staining protocol(s) from any suitable source(s).

The system 102 includes a physician clinical records system 106 and a histopathology imaging system 108. Any number of medical image data sources may be accessible using the system 100. The histopathology images may include one or more images captured by any dedicated digital medical image scanner(s), e.g., any suitable optical histopathology slide scanner including magnified (e.g., 20x and 40x resolution) scanners. Further still, the biomarker prediction system 102 may receive images from one or more histopathology image repositories 110 (e.g., one or more electronic databases, non-transitory computer-readable memories, etc.). In yet other examples, images may be received from a partner genomic sequencing system 112, e.g., the TCGA and NCI Genomic Data Commons. Further still, the biomarker prediction system 102 may receive histopathology images from an organoid, tumor organoid, or tumoroid modeling lab 116.

The above-mentioned image sources may communicate image data, genomic data, patient data, treatment data, historical data, etc., in accordance with the techniques and processes described herein. Each of the image sources may represent multiple image sources. Further, each of these image sources may be considered a different data source, those data sources may be capable of generating and providing imaging data that differs from other providers, hospitals, etc. The imaging data between different sources potentially differs in one or more ways, resulting in different data source-specific bias, such as in different dyes, biospecimen fixations, embeddings, staining protocols, and distinct pathology imaging instruments and settings.

In the example of FIG. 1, the imaging-based biomarker prediction system 102 includes an image pre-processing sub-system 114 that performs initial image processing to enhance image data for faster processing in training a machine learning framework and for performing biomarker prediction using a trained deep learning framework. In the illustrated example, the image pre-processing sub-system 114 performs a normalization process on received image data, including one or more of color normalization 114a, intensity normalization 114b, and imaging source normalization 114c, to compensate for and correct for differences in the received image data. While in some examples the imaging-based biomarker prediction system 102 receives medical images, in other examples the sub-system 114 is able to generate medical images, either from received histopathology slides or from other received images, such as generating composite histopathology images by aligning shifted histopathology images to compensate from vertical/horizontal shift. This image pre-processing allows a deep learning framework to more efficiently analyze images across large data sets (e.g., over 1000s, 10000s, to 100000s, to 1000000s of medical images), thereby resulting in faster training and faster analysis processing.

The image pre-processing sub-system 114 may perform further image processing that removes non-tissue objects (e.g., artifacts) and other noise from received images by doing preliminary tissue detection 114d, for example, to identify regions of the images corresponding to histopathology stained tissue for subsequent analysis, classification, and segmentation.

The pre-processing sub-system 114 may differentiate between tissue and non-tissue regions of the image and uses Gaussian blur removal to edit pixels with non-tissue objects. In an example, any control tissue on a slide that is not part of the tumor sample tissue can be detected and labeled as control tissue by the tissue detector or manually labeled by a human analyst as control tissue that should be excluded from the downstream tile grid projections.

Non-tissue objects include artifacts, markings, and debris in the image. Debris may include keratin, severely compressed or smashed tissue that cannot be visually analyzed, and any objects that were not collected with the sample.

In an example, a slide image contains marker ink or other writing that the sub-system 114 detects and digitally deletes. Marker ink or other writing may be transparent over the tissue, meaning that the tissue on the slide may be visible through the ink. Because the ink of each marking is one color, the ink causes a consistent shift in the RGB values of the pixels that contain stained tissue underneath the ink compared to pixels that contain stained tissue without ink.

In an example, the sub-system 114 locates portions of the slide image that have ink by detecting portions that have RGB values that are different from the RGB values of the rest of the slide image, where the difference between the RGB values from the two portions is consistent. Then, the tissue detector may subtract the difference between the RGB values of the pixels in the ink portions and the pixels in the non-ink portions from the RGB values of the pixels in the ink portions to digitally delete the ink.

In an example, the sub-system 114 eliminates pixels in the image that have low local variability. These pixels may represent artifacts, markings, or blurred areas caused by the tissue slice being out of focus, an air bubble being trapped between the two glass layers of the slide, or pen marks on the slide.

In an example, the sub-system 114 removes these pixels by converting the image to a grayscale image, passing the grayscale image through a Gaussian blur filter that mathematically adjusts the original grayscale value of each pixel to a blurred grayscale value to create a blurred image. Other filters may be used to blur the image. Then, for each pixel, the sub-system 114 subtracts the blurred grayscale value from the original grayscale value to create a difference grayscale value. In one example, if a difference grayscale value of a pixel is less than a user-defined threshold, it may indicate that the blur filter did not significantly alter the original grayscale value and the pixel in the original image was located in a blurred region. The difference grayscale values may be compared to a threshold to create a binary mask that indicates where the blurred regions are that may be designated as non-tissue regions. A mask may be a copy of an image, where the colors, RGB values, or other values in the pixels are adjusted to show the presence or absence of an object of a certain type to show the location of all objects of that type. For example, the binary mask may be generated by setting the binary value of each pixel to 0 if the pixel has a difference grayscale value less than a user-defined blur threshold and setting the binary value of each pixel to 1 if the pixel has a difference grayscale value higher than or equal to a user-defined blur threshold. The regions of the binary mask that have pixel binary values of 0 indicate blurred areas in the original image that may be designated as non-tissue.

As further described herein, in multiscale configuration where image data is to be analyzed on a tile-basis, in some examples, image pre-processing includes receiving an initial histopathology image, at a first image resolution, downsampling that image to a second image resolution, and then performing a normalization on the downsampled histopathology image, such as color and/or intensity normalization, and removing non-tissue objects from the image.

In single-scale configurations, by contrast, downsampling of the received histopathology image is not used. Single-scale configurations analyze image data on a slide-level basis, not on a tile-basis.

In yet some hybrid versions of each of multiscale and single-scale configurations a tiling process is imposed on received histopathology images to generate tiles for a tile-based analysis thereof.

The imaging-based biomarker prediction system 102 may be a standalone system interfacing with the external (i.e., third party) network-accessible systems 106, 108, 110, 112, and 116. In some examples, the imaging-based biomarker prediction system 102 may be integrated with one or more of these systems, including as part of a distributed cloud-based platform. For example, the system 102 may be integrated with a histopathology imaging system, such as a digital H&E stain imaging system, e.g. to allow for expedited biomarker analysis and reporting at the imaging. Indeed, any of the functions described in the techniques herein may be distributed across one or more network accessible devices, including cloud-based devices.

In some examples, the imaging-based biomarker prediction system 102 is part of a comprehensive biomarker prediction, patient diagnosis, and patient treatment system. For example, the imaging-based biomarker prediction system 102 may be coupled to communicate predicted biomarker information, tumor prediction, and tumor state information to external systems, including a computer-based pathology lab/oncology system 118 that may receive a generated biomarker report including image overlay mapping and use the same for further diagnosing cancer state of the patient and for identifying matching therapies for use in treating the patient. The imaging-based biomarker prediction system 102 may further send generated reports to a computer system 120 of the patient's primary care provider and to a physician clinical records system 122 for databasing the patients report with previously generated reports on the patient and/or with databases of generated reports on other patients for use in future patient analyses, including deep learning analyses, such as those described herein.

To analyze the received histopathology image data and other data, the imaging-based biomarker prediction system 102 includes a deep learning framework 150 that implements various machine learning techniques to generate trained classifier models for image-based biomarker analysis from received training sets of image data or sets of image data and other patient information. With trained classifier models, the deep learning framework 150 is further used to analyze and diagnose the presence of image-based biomarkers in subsequent images collected from patients. In this manner, images and other data of previously treated and analyzed patients is utilized, through the trained models, to provide analysis and diagnosis capabilities for future patients.

In the example system 100, the deep learning framework 150 includes a histopathology image-based classifier training module 160 that can access received and stored data from the external systems 106, 108, 110, 112, and 116, and any others, where that data may be parsed from received data streams and databased into different data types. The different data types may be divided into image data 162a which may be associated with the other data types, including molecular data 162b, demographic data 162c, tumor response data 162d and quality control data 162e. An association may be formed by labeling the image data 162a with one or more of the different data types. By labeling the image data 162a according to associations with the other data types, the imaging-based biomarker prediction system may train an image classifier module to predict the one or more different data types from image data 162a.

In the illustrated data, the deep learning framework 150 includes image data 162a. For example, to train or use a multiscale PD-L1 biomarker classifier, this image data 162a may include pre-processed image data received from the sub-system 114, images from H&E slides or images from IHC slides (with or without human annotation), including IHC slides targeting (staining or detecting) PD-L1, PTEN, EGFR, Beta catenin/catenin beta1, NTRK, HRD, PIK3CA, and hormone receptors including HER2, AR, ER, and PR. To train or use other biomarker classifiers, whether multiscale classifiers or single-scale classifiers, the image data 162A may include images from other stained slides. Further, in the example of training a single scale classifier, the image data 162A is image data associated with RNA sequence data for particular biomarker clusters, to allow multiple instance learning (MIL) techniques herein.

The molecular data 162b may include DNA sequences, RNA sequences, metabolomics data, proteomic/cytokine data, epigenomic data, organoid data, raw karyotype data, transcription data, transcriptomics, metabolomics, microbiomics, and immunomics, identification of SNP, MNP, InDel, MSI, TMB, CNV, Fusions, loss of heterozygosity, loss or gain of function. Epigenomic data includes DNA methylation, histone modification, or other factors which deactivate a gene or cause alterations to gene function without altering the sequence of nucleotides in the gene. Microbiomics includes data on viral infections which may affect treatment and diagnosis of certain illnesses as well as the bacteria present in the patient's gastrointestinal tract which may affect the efficacy of medicines ingested by the patient, among other effects on the patient's health. Proteomic data includes protein composition, structure, and activity; when and where proteins are expressed; rates of protein production, degradation, and steady-state abundance; how proteins are modified, for example, post-translational modifications such as phosphorylation; the movement of proteins between subcellular compartments; the involvement of proteins in metabolic pathways; how proteins interact with one another; or modifications to the protein after translation from the RNA such as phosphorylation, ubiquitination, methylation, acetylation, glycosylation, oxidation, or nitrosylation.

The deep learning framework 150 may further include demographic data 162c and tumor response data 162d (including data about a reduction in the growth of the tumor after exposure to certain therapies, for example immunotherapies, DNA damaging therapies like PARP inhibitors or platinums, or HDAC inhibitors). The demographic data 162c may include age, gender, race, national origin, etc. The tumor response data 162d may include epigenomic data, examples of which include alterations in chromatin morphology and histone modifications.

The tumor response data 162d may include cellular pathways, example of which include IFN gamma, EGFR, MAP KINASE, mTOR, CYP, CIMP, and AKT pathways, as well as pathways downstream of HER2 and other hormone receptors. The tumor response data 162d may include cell state indicators, examples of which include Collagen composition, appearance, or refractivity (for example, extracellular vs fibroblast, nodular fasciitis), density of stroma or other stromal characteristics (for example, thickness of stroma, wet vs. dry) and/or angiogenesis or general appearance of vasculature (including distribution of vasculature in collagen/stroma, also described as epithelial-mesenchymal transition or EMT). The tumor response data 162d may include tumor characteristics, examples of which include the presence of tumor budding or other morphological features/characteristics demonstrating tumor complexity, tumor size (including the bulky or light status of a tumor), aggressiveness of tumor (for example, known as high grade basaloid tumor, especially in colorectal cancer, or high grade dysplasia, especially in Barrett's esophagus), and/or the immune state of a tumor (for example, inflamed/"hot" vs. non-inflamed/"cold" vs immune excluded).

The quality control data 162e may include sets of computer-executable instructions for coordinating activities of the system 102 with one or more quality control elements. In some aspects, the quality control data 162e may include one or more sets of computer-executable instructions for performing quality control techniques, such as attention-based techniques. For example, the quality control data 162e may include a set of computer-executable instructions that, when executed, cause the image based biomarker prediction system 102 to evaluate the quality of a machine learning model output (e.g., an output of the deep learning framework 150).

The histopathology image-based classifier training module 160 may be configured with an image-analysis adapted machine learning techniques, including, for example, deep learning techniques, including, by way of example, a CNN model and, more particular, a tile-resolution CNN, that in some examples is implemented as a FCN model, and, more particularly still, implemented as a tile-resolution FCN model. Any of the data types 162a - 162e may be obtained directly from data communicated to the imaging-based biomarker prediction system 102, such as contained within and communicated along with the histopathology images. The data types 162a-162e may be used by the histopathology image-based classifier training module 160 to develop classifiers for identifying one or more of the biomarkers discussed herein.

In one example, a histopathology image may be segmented and each segment of the image may be labeled according to one or more data types that may be classified to that segment. In another example, the histopathology image may be labeled as a whole according to the one or more data types that may be classified to the image or at least one segment of the image. Data types may indicate one or more biomarkers and labeling a histopathology image or a segment with a data type may identify the biomarker.

In the example system 100, the deep learning framework 150 further includes a trained image classifier module 170 that may also be configured with the deep learning techniques, including those implementing the module 160. In some examples, the trained image classifier module 170 accesses the image data 162 for analysis and biomarker classification. In some examples, the module 170 further accesses the molecular data 162, the demographic data 162c, and/or tumor response data 162d for analysis and tumor prediction, matched therapy predictions, etc.

The trained image classifier module 170 includes trained tissue classifiers 172, trained by the module 160 using one or more training image sets, to identify and classify tissue type in regions/areas of received image data. In some examples, these trained tissue classifiers are trained to identify biomarkers via the tissue classification, where these include single-scale configured classifiers 172a and multiscale classifiers 172b.

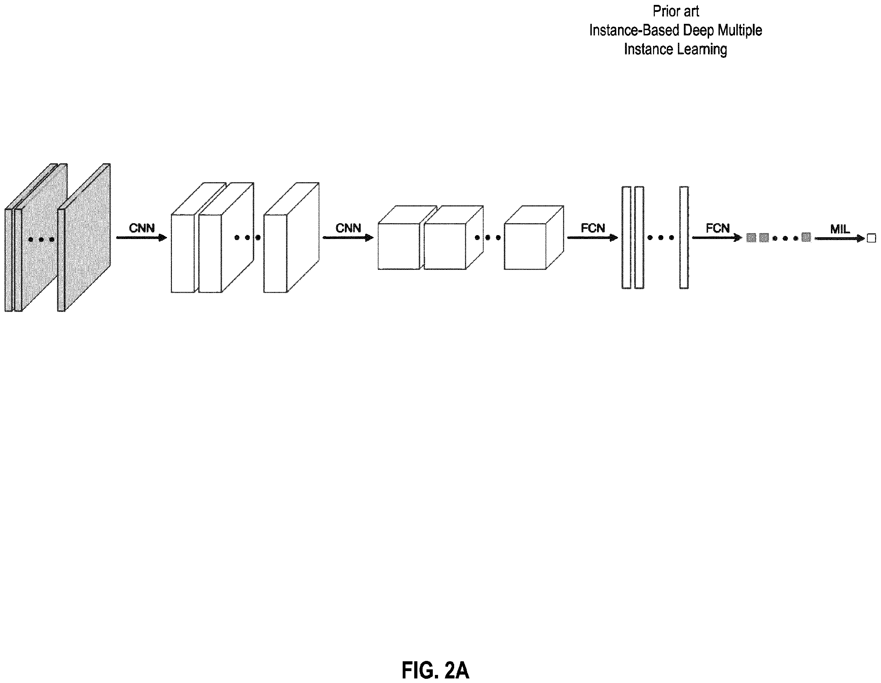

The image classifier module 170 may include one or more attention networks, such as those depicted in FIGs. 2A-2C below, and/or other networks that are based on or inherit properties of those network architectures. In some aspects, the attention network may include a long-short term memory (LSTM) model architecture and may include one or more embedding layers. The attention network may be a deep learning model. The attention network layers may be combined with one or more of the single-scale 172a and/or multiscale classifiers 172b, such that the attention network processes predictions of these classifiers as they are being operated.

The module 170 may further include other trained classifiers, including, trained cell classifiers 174 that identify biomarkers via cell classification. The module 170 may further include a cell segmenter 176 that identifies cells within a histopathology image, including cell borders, interiors, and exteriors.

In examples herein, the tissue classifiers 172 may include biomarker classifiers specifically trained to identify tumor infiltration (such as by ratio of lymphocytes in tumor tissue to all cells in tumor tissue), PD-L1 (such as positive or negative status), ploidy (such as by a score), CMS (such as to identify subtype), NC Ratio (such as nucleus size identification), signet ring morphology (such as a classification of a signet cell or vacuole size), HRD (such as by a score, or by a positive or negative classification), etc. in accordance with the biomarkers herein.

As detailed herein, the trained image classifier module 170 and associated classifiers may be configured with an image-analysis adapted machine learning techniques, including, for example, deep learning techniques, including, by way of example, a CNN model and, more particular, a tile-resolution CNN, that in some examples is implemented as a FCN model, and, more particularly still, implemented as a tile-resolution FCN model, etc. In particular, FIG. 2A-FIG. 2C depict specific examples of multiple instance learning based models that may be configured to perform quality control checks using the present techniques.

The system 102 further includes a tumor report generator 180 configured to receive classification data from the trained tissue (biomarker) classifiers 172, the trained cell (biomarker) classifiers 174 and the cell segmenter 172 and determine tumor content characteristics for the image data and generate digital image and statistical data reports, where such output data may be provided to the pathology lab 118, primary care physician system 120, genomic sequencing system 112, a tumor board, a tumor board electronic software system, or other external computer system for display or consumption in further processes. In some aspects, a report that includes one or more high attention tiles may be displayed to a clinician, to allow the clinician to determine whether to pass or fail a model's prediction with respect to a slide.

### Multiple Instance Learning Using Attention Networks

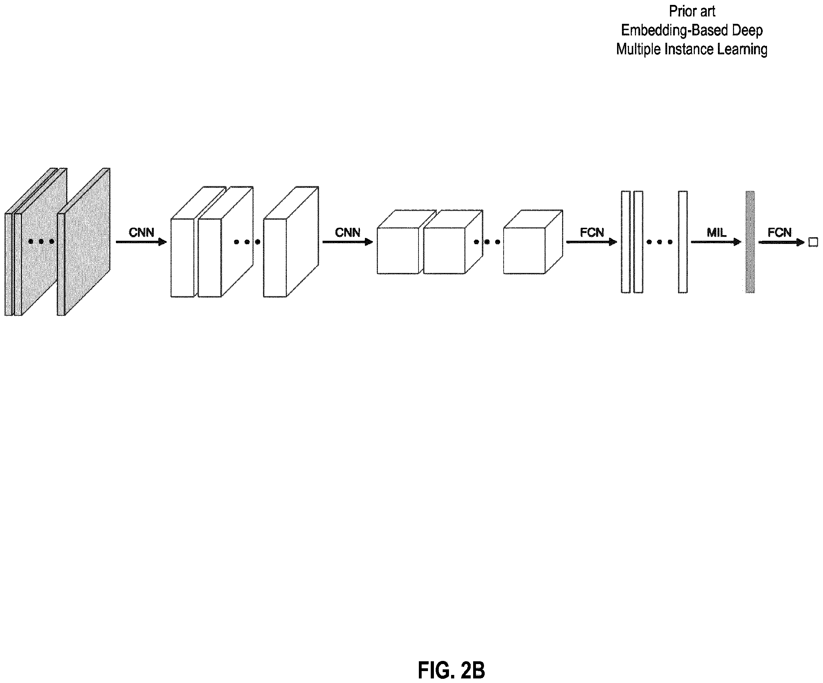

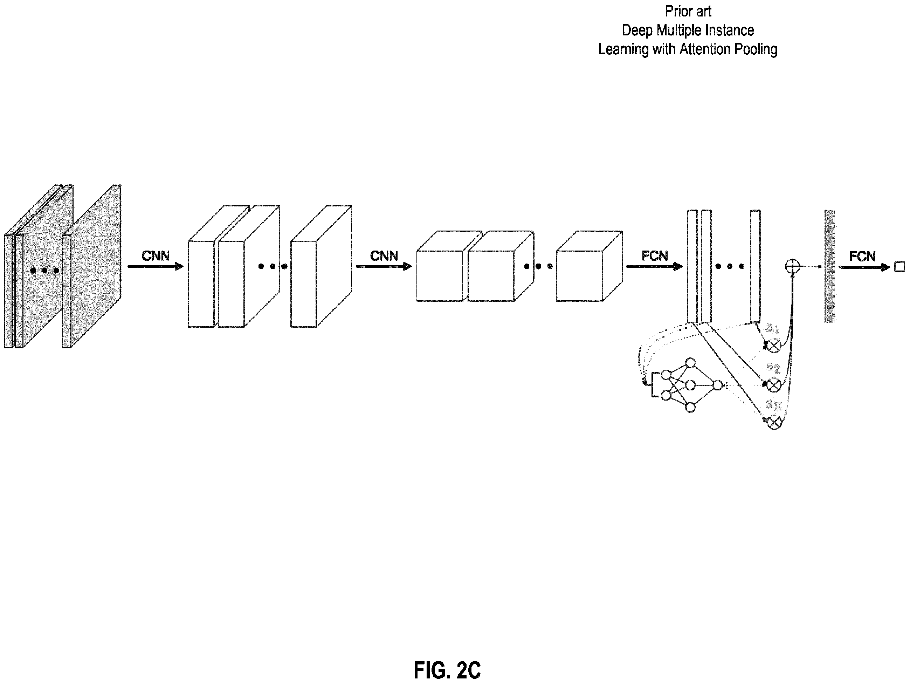

FIGs. 2A, 2B and 2C depict exemplary conventional attention-based multiple instance learning networks, according to some aspects. In particular, FIG. 2A depicts a conventional instance-based deep multiple instance learning network. FIG. 2B depicts a conventional embedding-based deep multiple instance learning network. FIG. 2C depicts a conventional deep multiple instance learning network with attention pooling. For example, the attention networks in FIGs. 2A-2C may be implemented based on the general techniques of Ilse, M., Tomczak, J. & Welling, M.. (2018). Attention-based Deep Multiple Instance Learning. Proceedings of the 35th International Conference on Machine Learning, in Proceedings of Machine Learning Research 80:2127-2136 Available from proceedings.mlr.press.

### Exemplary Computer-Implemented Attention Network-Based Quality Control Methods

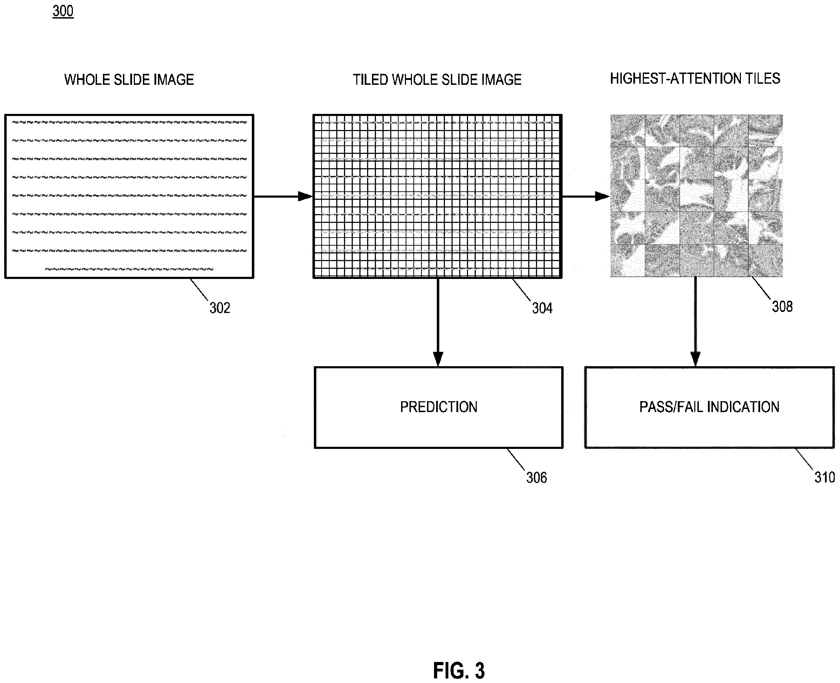

FIG. 3 depicts an exemplary flow diagram of an attention network-based quality control method 300, according to some aspects. For example, the method 300 of FIG. 3 may be performed by the system 100 of FIG. 1.

The method 300 may include receiving a whole slide image (block 302). The whole slide image may be a high resolution image, in some aspects. The whole slide image may be an H&E stained slide as discussed above, or other suitably stained images. For example, the slide may be stored in the histopathology images repository 110 of FIG. 1. The slides may be received directly from the histopathology imaging system 108, in some aspects. The method 300 may include receiving the whole-slide image, wherein the whole-slide image is subdivided into a grid including a plurality of image tiles. This step involves the initial processing of the whole-slide image, breaking it down into manageable sections or tiles for further analysis (block 304). The subdivision into tiles allows for reduction in the computer processing power required to analyze an image, by analyzing a portion of the whole slide image (comprised of at least one tile) instead of the entire whole slide image, which may be a very data dense image file or files having a high number of pixels and bytes. In some embodiments, the computing system has sufficient memory that there is no advantage to subdividing the whole slide image into tiles. The subdivision may also allow for a more granular examination of the image, enabling the identification of specific features or anomalies that might be indicative of certain conditions or states within the sample.

These subdivisions may be referred to as "tiles." For example, the method 300 may tile the whole slide image using rectangle subdivisions, square subdivisions, or other suitable subdivisions.

The method 300 may include processing the tiles using a trained machine learning model (e.g., an artificial neural network) that generates a prediction (block 306). This process may involve the use of an artificial neural network to evaluate each tile and assign it an attention score reflecting the relevance or importance of the tile in the context of the prediction being made. Tiles with higher attention scores are considered more significant and may be given priority in the subsequent analysis. This step may involve the application of a trained machine learning model to the tiles of the whole-slide image. For example, the model may process features and characteristics of the tiles, leveraging the attention scores to focus on the most relevant sections. Based on this analysis, the model may generate a prediction regarding the condition or state represented by the whole-slide image. The method 300 may include determining, based on an artificial neural network, a respective attention score for each of the plurality of image tiles (block 308).

The method 300 may include processing the selected subset of image tiles to determine their biological relevance to the prediction at block 306, Determining the biological relevance may include evaluating features indicative of tumor presence or absence and excluding one or more tiles based on the presence of artifacts.

The method may include generating a pass/fail indication corresponding to the prediction by selecting a subset of the plurality of image tiles based on the respective attention score of each of the subset of the plurality of image tiles (block 310). This step may include making a determination of pass or fail for the prediction generated at block 306. This determination may be made by selecting a subset of the image tiles based on their attention scores and determining whether the content of those image tiles is relevant to the prediction. The selected tiles are those considered most critical to the accuracy of the prediction. It should be appreciated that processing the whole-slide image using the trained machine learning model to generate the prediction based on the plurality of image tiles and determining the respective attention score for each of the plurality of image tiles based on the artificial neural network may be performed serially or in parallel. For example, the sub-system 114 and deep learning framework 150 may include components that are configured to perform this parallel processing. It should also be appreciated that the machine learning model (e.g., artificial neural network) that generates the prediction at block 306 may be a first machine learning model (e.g., artificial neural network), and the machine learning model (e.g., artificial neural network) that generates tile-wise attention scores at block 308 may be a second machine learning model (e.g., artificial neural network). In some aspects, the first machine learning model and the second machine learning model may be different models. In some aspects, the first machine learning model and the second machine learning model may compose a single model (e.g., a composite or ensemble model).

The prediction at block 306 may relate to whether the slide image includes a biomarker, a tumor, or a specific cancer, a cell type, density of stroma, necrosis, presence of immune cells, stain characteristics (over staining or under staining), perineural invasion, other biological characteristics that inform the reliability of the presence of the predicted biomarker, etc. One or more machine learning model may be trained to generate a Boolean prediction regarding whether a given slide includes any of the biological characteristics (e.g., presence/absence of necrotic tissue) or a numerical prediction based on biological characteristics (e.g., stromal density).

The present techniques may include deploying biomarker predictors from H&E to identify patients most likely to harbor actionable mutations and encourage them to get confirmatory testing. The described QC process will accelerate pathologist review of model predictions, and lend critical insights into the research pipeline by identifying cases in which model predictions fail to pass the associated QC requirements. These processes ensure that models are focusing on relevant biology, such as tumor tissue as opposed to background or normal tissue. By doing so, this QC process confers greater interpretability and believability by human pathologists.

Additionally, these QC processes may be put in place before model results are delivered to customers. Because this QC process will identify failure cases before results are delivered to customers, the overall performance of models on customer datasets will be improved, which enables preemptive filtering out of expected failure cases. More accurate biomarker predictions by QC-failing predictions that are most likely to be unreliable will improve the believability of the modeling in the eyes of pathologists and can accelerate the customer adoption rates. Patients stand to benefit from this QC strategy, as reviews are made at a per-patient level, in which each patient's analysis is reviewed for biological relevance before being delivered.

The method 300 may further include processing the tiled whole slide image generated at block 304 using one or more machine learning models (e.g., one or more attention networks) trained to review smaller bits or subdivisions of the whole slide image. The machine learning models may be trained to review a plurality of tiles that make up a larger image, and to run inference on each one of the tiles (block 308). For example, the method 300 may include ranking each of the tiles according to the respective scores assigned by the model, to identify which are the most important tiles in an image, by determining which of the tiles were considered significant during modeling. These significant tiles may be referred to as the highest attention tiles (i.e., the tiles determinative of the prediction output at block 306). In some aspects, the method 300 may analyze a ratio of tiles (e.g., one half of the tiles, one third of the tiles, one quarter of the tiles, every other tile, etc.). Thus, the subset of tiles could correspond to a percentage of the total number of tiles from the slide image. In some cases, the number of the subset of tiles may be a threshold.

In some aspects, scores may be calculated based on an aggregation of each respective score of a subset of the plurality of image tiles. The whole-slide image may be subdivided into a grid including a plurality of image tiles, and a respective score determined for each of the image tiles based on an artificial neural network. The whole-slide image may then be processed using a trained machine learning model to generate a prediction based on the plurality of image tiles. The pass/fail indication corresponding to the prediction may be generated based on the aggregation of the scores of a subset of the image tiles.

For example, consider a whole-slide image that is subdivided into 128 tiles. Each tile may be scored individually based on its features and relevance as determined by an artificial neural network as discussed herein. Suppose that the trained machine learning model then uses these scores to generate a prediction about the presence of a specific biomarker in the whole-slide image. If the aggregated scores of the most relevant subset of tiles (for instance, the top 32 tiles with the highest scores) meet a predetermined threshold, the prediction might be passed. Conversely, if the aggregated scores do not meet the predetermined threshold, the prediction might be failed. This approach advantageously provides a more focused quality control process that emphasizes the most relevant portions of the image for making accurate predictions. The predetermined threshold may be, for example, whether the selected tiles are biologically relevant, for example, according to whether they exhibit characteristics indicative of tumor presence. Alternate/ alternative threshold may be a quantified lack of artifacts.

In the described system, attention scores are used to analyze whole-slide images by subdividing them into tiles and evaluating each tile based on its unique features. These features, inherent to the tiles, are inputs to the model, which incorporates an attention layer. This layer processes the features throughout the model, ensuring that the characteristics of each tile contribute to its attention score. Thus, tiles with higher attention scores may be deemed more significant, thereby exerting greater influence on the overall prediction of the presence of specific biomarkers within the whole-slide image. The model may aggregate the scores of the most relevant tiles (for example, the top N tiles with the highest attention scores), to determine if they meet a predetermined threshold. This threshold could be based on biological relevance, such as the presence of tumor-indicative characteristics, or the absence of artifacts. Meeting this threshold may indicate a positive prediction, while failure to do so may result in a negative prediction. This method enhances the precision of the prediction by focusing on the most pertinent sections of the image, thereby improving the quality control process in the identification of biomarkers.

Other thresholds may include density of stroma, presence of immune cells, and stain characteristics such as over-staining or under-staining. Additionally, the presence of perineural invasion and other biological characteristics that inform the reliability of the presence of the predicted biomarker may be used as thresholds. These thresholds ensure that models focus on relevant biology, such as tumor tissue which may be more informative than background or normal tissue in certain instances, thereby conferring greater interpretability and believability by human pathologists. For some cancer types or model predictions, stroma or necrotic tissue may be biologically irrelevant to a model prediction and undesirable in a high-attention tile. The process of determining these thresholds may involve empirical testing. In some aspects, multiple thresholds may be applied to determine whether to pass/fail a given prediction.

The method 300 may include determining an artifact characteristic. For example, the artifact presence/absence indication may be determined via a model, via human review, or via any other suitable technique.

The method 300 may include aggregating the respective contribution of each of the attention tiles to make a quality control prediction for the whole slide image (block 310).

As discussed above, the present techniques do not process an entire histopathology image for QC, instead processing a subset of tiles for QC. This is beneficial for several reasons. First, performing QC on an entire image as in prior methods is very computationally expensive because all of the data in the image must be stored and processed, regardless of whether it is determinative of the modeling outcome. Thus, the present techniques represent an improvement by reducing the data processing requirements for whole slide prediction QC techniques.

Second, performing QC using the present techniques provides improved results over previous QC prediction methods, because knowing what the model found to be important, i.e., what the model paid attention to, is useful information to have. For example, consider a slide where 20% of the slide is out of focus, but the regions that are out-of-focus are not biologically pertinent. This slide might not pass slide-level QC heuristics. However, if the model has learned via its attention mechanism to focus its predictions on the pertinent regions, out-of-focus regions may not show up in the highest attention tiles, and the model may still issue a correct prediction.. Thus, the present techniques improve QC results when the model is seen to be making correct predictions.

The inverse is also true - an entire slide may pass an older QC test, even though the model's decision making was based on noise or irrelevant features. However, such a slide may fail the attention-based QC processes of the present techniques. In other words, a whole-slide image could represent a tumor that the model was trained to predict, but the model may give an incorrect prediction because the model is not paying attention to the important tiles (for example, tiles that are biologically relevant to the prediction). And conversely, a correct prediction could be based on spurious tiles in the slide.

Further, in one example, the prior quality control techniques were performed at an early stage in the slide analysis pipeline, that is, the moment the slice is put on the slide. At that moment in time, a decision was made whether to continue with sequencing and analyzing. The present techniques occur later in the process than the prior techniques, after the slide has been stained and used for pathology purposes, much nearer to the end of the bioinformatics analysis pipeline, when a predictive result has been generated that pathologists might want to use.

Thus, the present techniques include techniques for performing quality control on tiles themselves, leading to an overall slide-level prediction, rather than predictions based on analysis of the whole slide image. The quality control technique enables attention-level focus so that pass predictions can be assured to be based on positive tile information, and conversely, fail predictions can be assured to be based on negative tile information.

Although the present techniques occur at different stages from some other forms of quality control, as discussed above, the present techniques are not mutually exclusive with those techniques. Imagine that a company using quality control determines that predictions should not be made on slides that are 20% or less of tumor tissue. That may be implemented as a first-pass, informative quality control, using the prior techniques discussed above. The present techniques, when used in combination with such informative quality controls, improve upon them. For example, the present techniques may identify cases where, even though the first-pass, informative quality control passed the slide as containing threshold 20% tumor tissue, the machine learning model based its prediction on information other than the tumor tissue. The present techniques may thus perform a complementary error-correction mechanism when combined with other forms of QC.

The method 300 may include processing the whole-slide image using a secondary machine learning model to generate an additional characteristic for each of the plurality of image tiles, wherein the additional characteristic provides a quantitative score or classification for each tile, and wherein the pass/fail indication is further based on a thresholding of the additional characteristic. This additional characteristic may provide a quantitative score or classification for each tile, and the pass/fail indication may be further based on a thresholding of the additional characteristic. This step enhances the depth of analysis by introducing another layer of evaluation, allowing for a more nuanced understanding of the image tiles. For example, the secondary machine learning model may assess the presence of specific biomarkers, tumor content, or other relevant features within each tile. By thresholding the additional characteristic, the method 300 can set specific criteria that tiles must meet to contribute positively to the overall prediction. This approach ensures that only the most relevant and informative tiles influence the pass/fail indication, thereby improving the accuracy and reliability of the prediction.

The 300 method may include determining, via one or more processors, an artifact threshold. The method 300 may include determining, via one or more processors, a tumor content threshold. The method may include determining, via one or more processors, whether the plurality of image tiles include at least one of a biomarker, a tumor, or a specific cancer, a cell type, density of stroma, presence of immune cells, stain characteristics (over staining or under staining), perineural invasion, or another biological characteristic that informs reliability of the prediction. This determination may include processing a subset of tiles that the method 300 identified as high-attention tiles. The method 300 may include training, via one or more processors, the artificial neural network using feedback from a reviewer. The method 300 may include scoring the plurality of image tiles based on attention scores using the artificial neural network, wherein tiles with higher attention scores are prioritized for further analysis. The method 300 may include scoring the prioritized image tiles using a secondary model to assess content relevance, wherein tiles with low scores for artifacts and higher scores for biologically relevant content, including tumor tissue, are selected for generating the prediction. In some embodiments, higher scored tiles may be more likely to be selected for generating the prediction. The method 300 may include further training the artificial neural network based on feedback from the secondary model to improve the selecting of image tiles for quality control analysis. The method 300 may include integrating the pass/fail indication with a clinician workflow to inform subsequent diagnostic or treatment decisions, wherein the integration includes automatically updating patient records with the pass/fail indication and associated prediction details. The method 300 may include retraining or fine-tuning the trained machine learning model based on outcomes of the pass/fail indication to improve prediction accuracy for future whole-slide image analyses. The method 300 may include classifying the image tiles into high-attention tiles and low-attention tiles based on the respective scores, wherein the high-attention tiles are subjected to manual review by a reviewer to confirm the pass/fail indication. The method 300 may include re-running the prediction for the whole-slide image while excluding high-attention tiles identified as artifacts to enhance accuracy of the prediction. The method 300 may include determining, via one or more processors, a tumor percentage for the whole-slide image based on a number of image tiles identified as containing tumor tissue divided by a total number of image tiles reviewed; wherein the pass/fail indication is further based on a thresholding of the tumor percentage. The method 300 may include applying qualitative criteria to each of the image tiles reviewed to determine a presence of tumor tissue, artifacts, or other biological characteristics that inform a reliability of the prediction. The method 300 may include generating a report that includes a subset of tiles each having a high respective attention score without providing a pass/fail indication, to enable a clinician to make a determination based on the subset of tiles.

### Exemplary Attention Network Training

The block 308 in method 300 of FIG. 3 may include one or more layers of an attention network, as discussed above. In some aspects, these layers may be part of a machine learning model that generates the prediction 306. The layers of the attention network may be trained by human pathologists, sets of hierarchical rules, and/or one or more artificial intelligence or machine learning models (e.g., a generative adversarial network). For example, the highest attention tiles may be processed by a reviewer (human or computer-based). Based on these most important tiles which the model identifies as the biggest contributors to the whole slide prediction, the reviewer may determine whether the model has passed a QC threshold.

For example, a whole slide prediction model may be trained to predict a molecular signature (which one is not of particular importance to this example). This example model ranks a number (e.g., 10, 20, 100, etc.) of tiles of an H&E image as most important. The reviewer, which may be a human or autonomous component (e.g., a machine learning model) may review this number of tiles and quickly notice that each one includes a similar artifact (e.g., surgical ink, smudges, etc.). The reviewer reviews the highest attention or highest contribution tiles and determines the overall decision to QC pass or QC fail the prediction. The reviewer may then determine that the model failed QC. This QC fail may be provided to the model as further feedback training data, in some aspects. In some aspects, the present techniques may include functionality that allows the reviewer to remove tiles from the training data if they are junk/artifact tiles and then retrain the model.

Thus, the present techniques provide methods and systems for automatically identifying and training a model to learn aspects of an image that a trained pathologist would know are unrelated to the analysis task at hand (e.g., such as stray surgical ink, when the task is related to tumor tissue or other underlying biological analysis).

In particular, the method 300 may include performing QC of the overall prediction, wherein the QC includes failing those predictions most likely to be unreliable prior to further processing (e.g., before issuing reports to clients). This may include ranking the thousands of tiles via an attention method to classify the slide and failing the slide as a whole if too many tiles fail the QC characteristics. The ranking may be based on removing the lowest tumor content and greatest artifacts according to the tumor content. As noted, the training may be evaluated to ensure that predictions are coming from tumor tiles or other biologically relevant tiles, whereas conventional methodologies may make predictions from all tiles (tumor and non-tumor tiles).

### Exemplary Computer-Implemented Determination of Review Thresholds/Tolerances

In general, the present techniques include several techniques for making the overall process of attention-based review more efficient and accurate. For example, thresholds, or tolerances, may be determined for how many tiles the reviewer needs to review, for how many of the tiles may include artifacts before accuracy suffers, and for how much tumor content is needed. These thresholds are generally evaluated on a model-by-model basis since predictors generally lose sensitivity at different rates. However, the following techniques are generally applicable across models, and capable of full automation.

Reasonable thresholds/tolerances will depend on the task at hand and may be determined via simulation experiments. Generally, these are static values for a particular model, but can change if the model/classification task/network architecture is changed.

For underlying neural network architecture, the technique can be applied across a variety of backbone neural network architectures. The selection of most informative tiles changes subtly depending upon the network architecture (e.g., whether using a multiple instance learning aggregation of embeddings or an additive multiple instance learning aggregation of logits). In the former, the present techniques may select the most informative tiles based on the attention score. In the latter, the most informative tiles may be selected based on the largest difference in prediction logits between classes.

Conventional attention multi-instance learning and/or additive multi-instance learning may be used, in some aspects of the present techniques. Both techniques may use attention. In additive multi-instance learning, tile-level predictions are aggregated to form an overall prediction, based on weighted averages, using embeddings as a proxy for which tiles are most informative. In conventional attention multi-instance learning, embeddings are aggregated, and then another predictor produces a final prediction from the final embeddings. In additive multi-instance learning, the informativeness of tiles can be directly assessed because there are tile-level predictions. Thus, in some aspects, additive multi-instance learning may make it easier to determine which tiles are driving the prediction. Practically, this means that additive multi-instance learning results can be more reproducible.

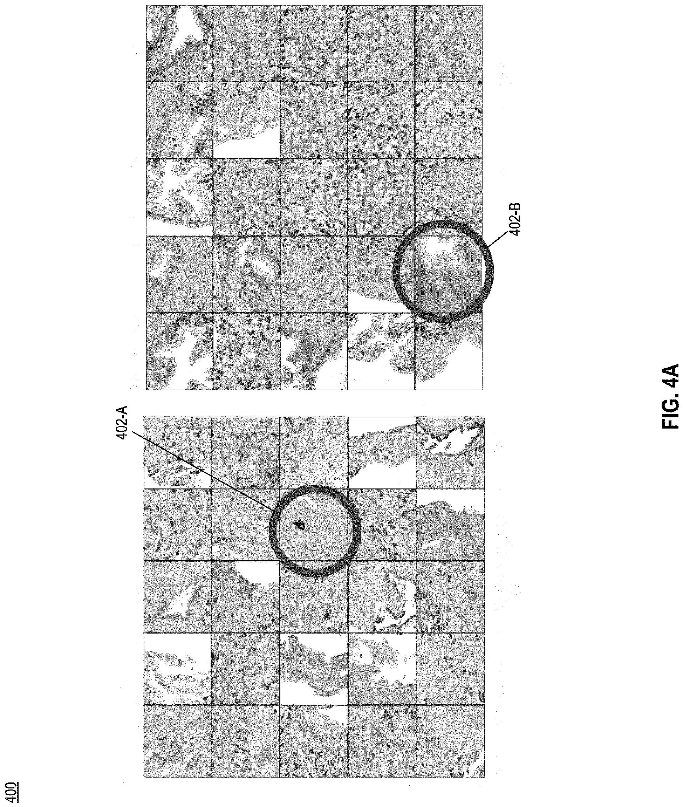

In some aspects, thresholds for the maximum number of artifact tiles tolerated for a QC pass may be determined by experiments that simulate introducing artifacts into bag-of-tiles evaluated by the model and measuring the number of artifacts at various levels of attention that can be introduced without changing the overall prediction more than a set tolerance. Effectively, various levels of artifact contamination are introduced. Those levels of contamination that do not affect the overall prediction are considered tolerable, and those that do affect the overall prediction are considered below the tolerance level. For example, FIG. 4A depicts example histology slides 400 depicting an artifact 402-A and an artifact 402-B corresponding, respectively, to a stray pen mark and a smudge.

Thresholds for the minimum number of tumor-containing tiles for a QC pass are similarly determined by experiments simulating a reduction in the number of tumor tiles in the prediction bag at various levels of attention and observing how much predictions change with respect to these reductions.

The tolerance for how much a prediction may change may be set by product definition, or an experiment such as how much prediction variability exists when issuing predictions on separate samples from the same patient.

Empirical testing has shown that taking the top N tiles (depending on the model architecture) correlates R² = 90% with the overall slide prediction, containing many (e.g., thousands or more) individual tiles. In general, empirical testing has shown that the top 100 tiles represent model predictions well.

In some aspects, the threshold may be set for a trained model based on the observation that there is natural variability in biological information being processed by the trained model. For example, a typical biopsy may include multiple core samples. The present techniques may process each of the cores to determine an amount of natural biological variability. This inter-core threshold variability may be, for example, 5% to 6%. This may be used as a threshold value for setting what is known as a meaningful change in variability. That is, any change above this threshold is considered meaningful. This meaningful change in variability value may be used to set a threshold for how much artifactual noise is allowed in a prediction. Other ways of setting the threshold may be used, in some aspects. For example, synthetically adding artifacts changes model predictions substantially after a certain threshold, as does synthetically removing tumor content from a slide image.

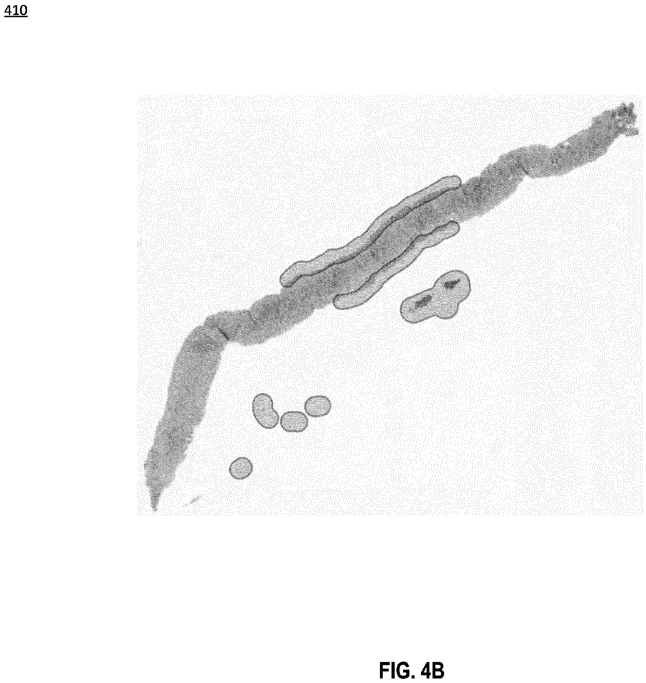

For example, FIG. 4B depicts an exemplary histology training image for simulating artifact effects on predictions, according to some aspects.

Simulated artifacts may be introduced into tiles to set the threshold for the maximum amount of artifact allowed to be in the top N tiles before the reviewer is asked to trigger a QC failure. For example, in a set of 100 top N tiles, a reviewer may be given one example that includes 99 tumor tiles and one having ink. The reviewer may determine that this represents a reasonable prediction and determine that the prediction passes QC. In another example, the set of 100 top N tiles may include 70 that include tumor tissue, and 30 that include ink. The reviewer may then determine that this is likely confounded learning, and that the model may be learning ink marks as opposed to the biological content. The question arises of what this threshold should be to guide the reviewer to issue a QC pass or fail, however - given that in this example, the threshold is likely somewhere between one and 30. In other embodiments, this threshold may differ (e.g., may be between one and five, one and 10, one and 15, one and 20, one and 25,one and 45, etc.). The present techniques may include determining a threshold based on experiments that measure impacts to predictions. For example, if Y% is the maximum allowable impact to predictions, the present techniques may determine a threshold of allowable tiles (X) by measuring: X artifact tiles introduced synthetically impacted the prediction tiles by less than Y%. In other words, beginning with zero artifacts, one tile at a time may be added (or portions of one or more tiles may be added), and the impact on predictions measured, unless or until Y% maximum is met or exceeded.

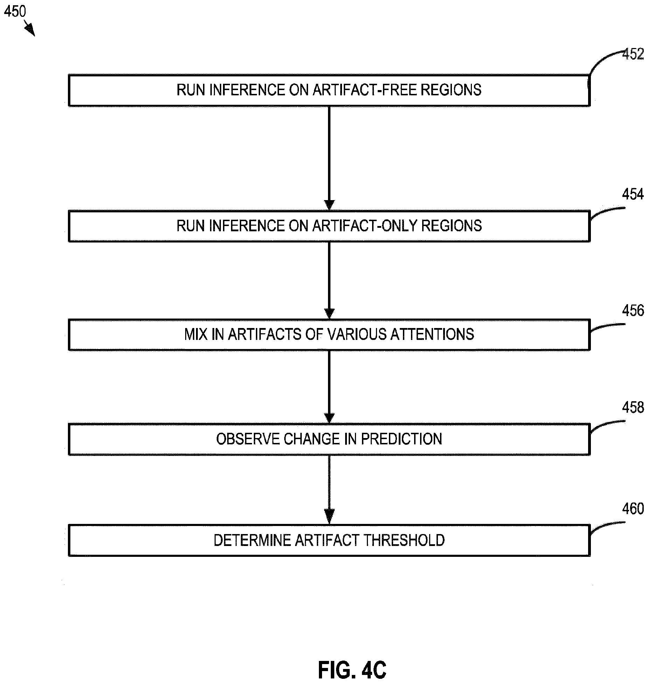

FIG. 4C depicts an exemplary computer-implemented method 450 for simulating artifact effects on predictions, according to some aspects. The method 450 may include running inference on artifact-free regions to generate a first prediction (block 452). The method 450 may include running inference on artifact-only regions to generate a second prediction (block 454). The method 450 may include mixing in artifacts of various attentions to the block 454 (block 456). The method 450 may include observing the change in prediction between the artifact-only inference and artifact-free inference (block 458). The method may include determining one or more thresholds regarding the amount of artifacts that may be added before the prediction loses acceptable accuracy or performance (i.e., one or more artifact thresholds) (block 460). The artifacts dataset used may include scan-lane issues, focus issues, and/or surgical ink issues.

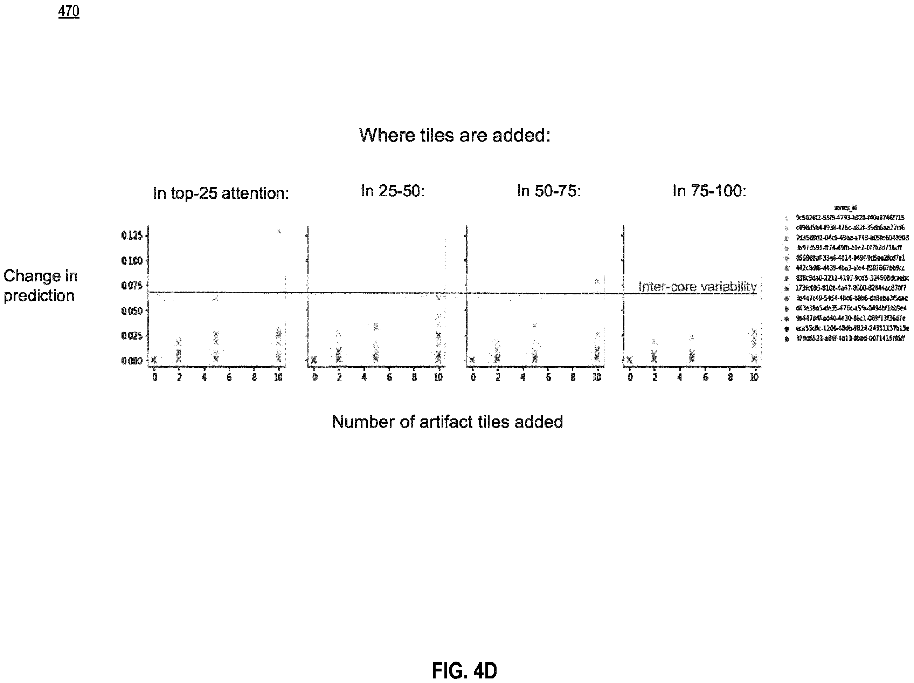

FIG. 4D depicts an exemplary chart 470 depicting results of empirical testing using the method of FIG. 4C, according to some aspects. Inter-core variability of predictions (median 0.7) is depicted as a benchmark. As evidenced, the present modeling techniques are fairly robust/stable with respect to the addition of artifacts. For example, adding up to approximately five artifacts to the top-25 tiles does not perform worse than the benchmark, nor does adding up to ten artifacts in the 25-100 tile cohort.

A simulated study may be performed to analyze the appropriate QC pass/fail threshold. In the study, a number of slides may be processed. When one of the slides changes above a tolerance at a given number of synthetic artifacts introduced, it may be assumed that most slides can tolerate this number of synthetic artifacts, and as such, that number of artifacts may be used for an overall threshold.

As noted, in some aspects, rather than using a human reviewer to determine a QC pass/fail threshold, an artificial intelligence and/or machine learning technique may determine a QC pass/fail threshold. Hierarchical rules may also be used, in some aspects.

As noted, the present techniques enable a reviewer (e.g., a pathologist) to review the highest attention (for multi-instance learning) or highest contribution (for additive multi-instance learning) tiles and evaluate them for sufficient tumor content and tolerable artifact content. The present techniques may include determining characteristics (e.g., metrics or thresholds) for this purpose. In some aspects, the number of tiles needed to be reviewed may be determined via experiments demonstrating how many tiles it takes to account for the overall prediction (within some tolerance).

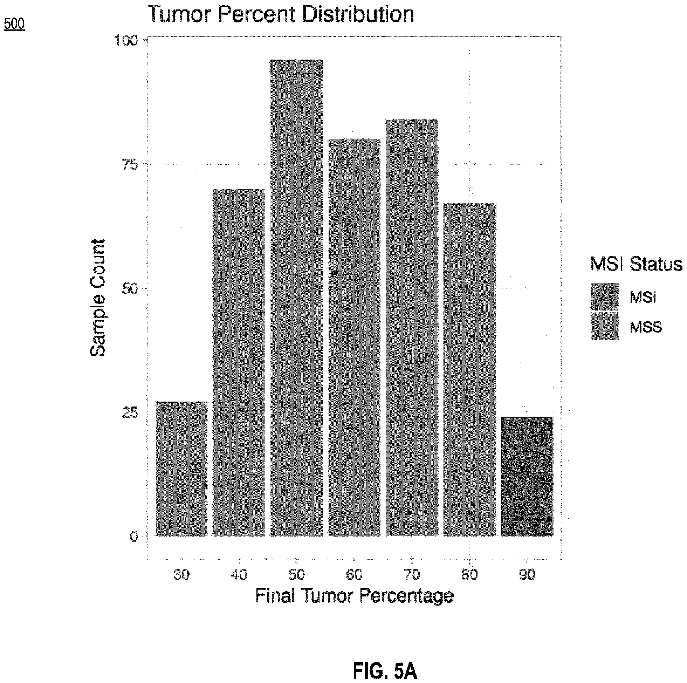

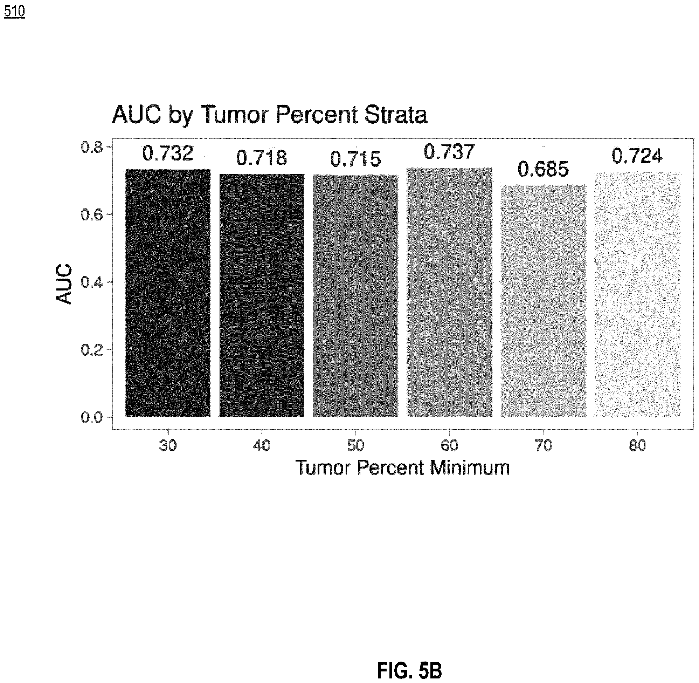

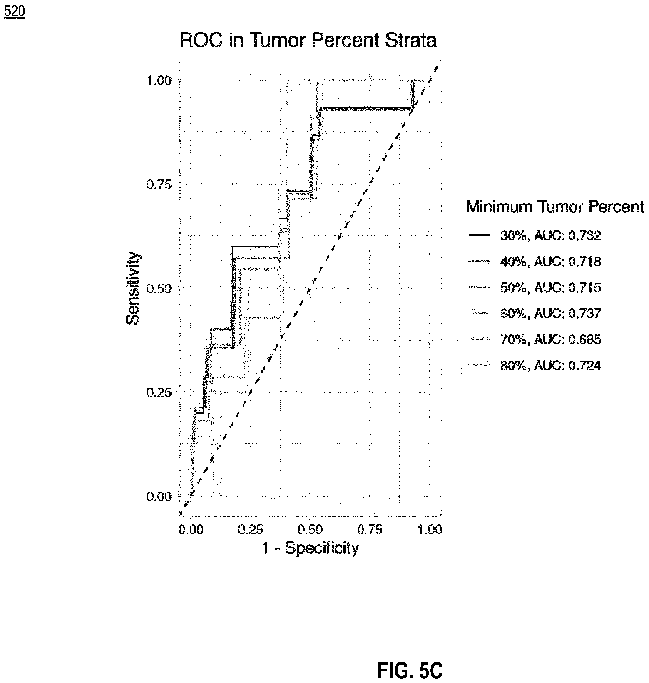

FIG. 5A depicts an exemplary chart 500 depicting tumor percent distribution (final tumor percentage by sample count). As shown in the chart 500, some strata lack any microsatellite instable (MSI) positive cases, whereas each includes microsatellite stable (MSS) cases. Model performance may be conditioned on minimum tumor content as an inclusion criteria. For example, a strata of 0.5 may include all slides whose tumor content is greater than 50%. The percentage of tumor content may be a continuous measurement. FIG. 5B depicts an exemplary chart 510 depicting AUC by tumor percent strata, according to some aspects. FIG. 5C depicts an exemplary chart 520 depicting ROC by tumor percent strata, according to some aspects.

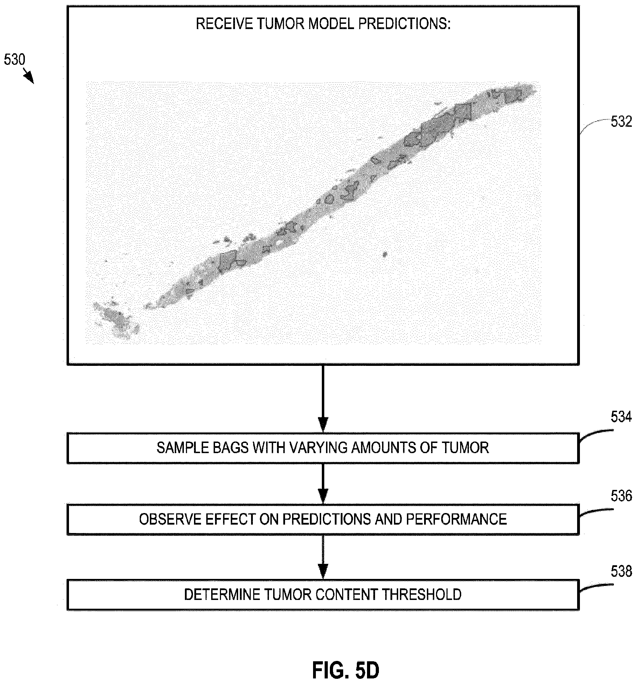

FIG. 5D depicts a block diagram of an exemplary computer-implemented method 530 for evaluating model performance conditioned on prediction, segmentation and/or detection performance to inform inclusion/exclusion criteria for MSI deployment. Specifically, model performance is evaluated within-strata (i.e., exclusively considering cases within a fixed strata) and further, by evaluating minimum tumor percent as an inclusion criteria, which is more realistic as a QC metric.

The method 530 may include carrying out a simulation to inform robustness to less than a percentage amount of tumor. The method 530 may include receiving tumor model predictions (block 532). The method 530 may include sampling bags (e.g., tiles) with varying amounts of tumor (block 534). The method 530 may include observing the effect on predictions and performance (block 536). The method 530 may include determining one or more numbers (e.g., one or more tumor content thresholds and/or one or more artifacts) beyond which the predictions lose accuracy and/or performance (block 538). For example, the percentage amount of tumor may be 30 percent. In some aspects, a number (e.g., 13) of MSI and MSS slides may be sampled to keep inference runtimes tractable.

Herein, the term "characteristics" may be used to describe visual features, thresholds and/or binary classifications. For example, tumor content characteristics may refer to a visual feature that indicates tumor cells, including but not limited to cell morphology, cell or cell organelle shapes, coloration of cell or cell organelle, etc. These characteristics may be any visual feature that a trained pathologist, pathologist's assistant or a trained machine learning model/computer vision model associates with the presence of tumor cells. In other examples, tumor content characteristics may refer to a percentage of tumor content as a continuous measurement (e.g., a percentage). Artifact characteristics may refer to the presence or absence of an artifact (e.g., a binary classification or Boolean value).

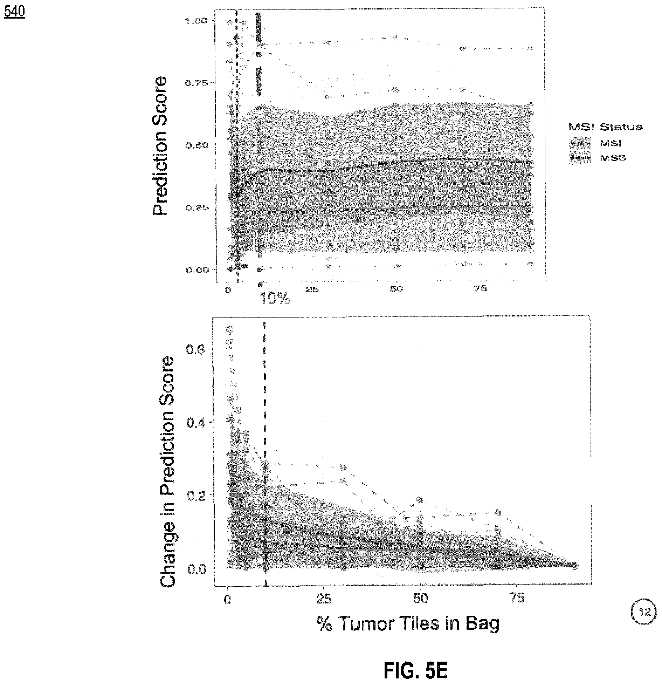

FIG. 5E depicts exemplary charts depicting the change in prediction score as a function of the percentage of tumor tiles in the bag, using the method 530 of FIG. 5D. In this embodiment, these results demonstrate that predictive performance appears robust to synthetic alterations down to 10% of tumor. The predictions start to change with less than 30% of tumor in a given bag; however, predictive performance of MSI vs. MSS remains stable to less than 10% of tumor in the bag.

### Exemplary Development and Validation of Microsatellite Instability Predictor from Prostate Cancer Whole-Slide Images

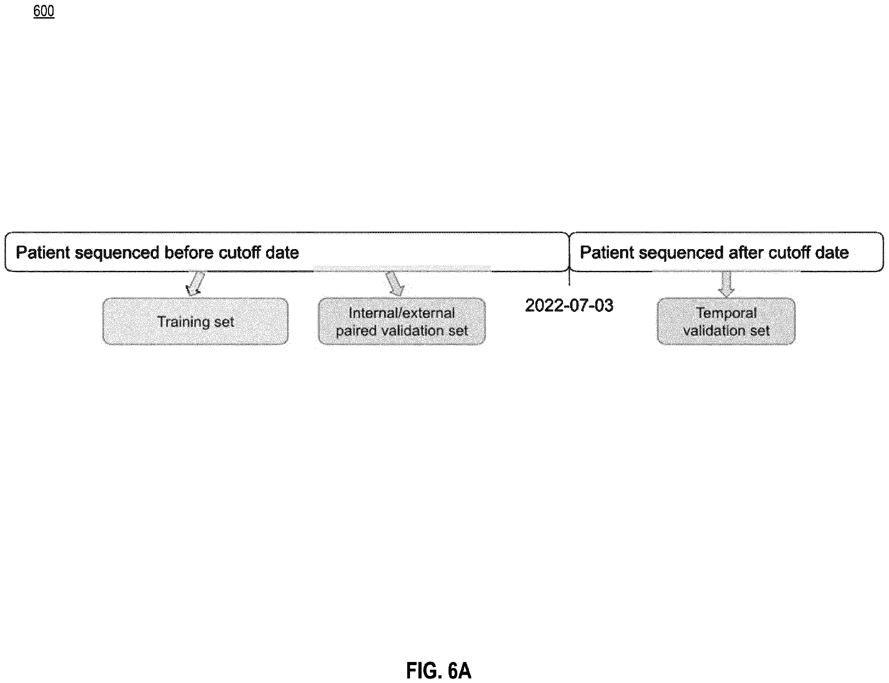

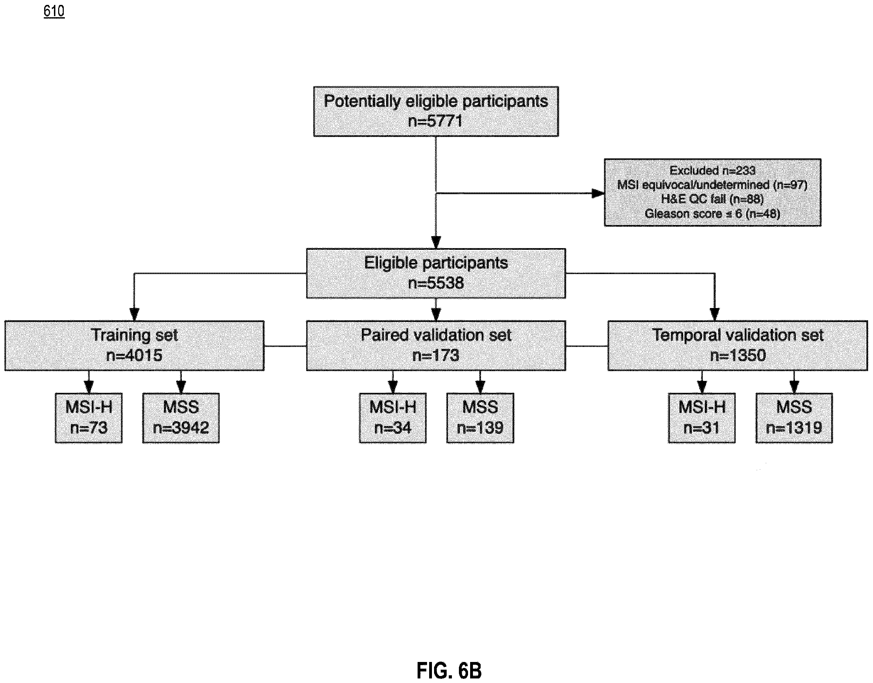

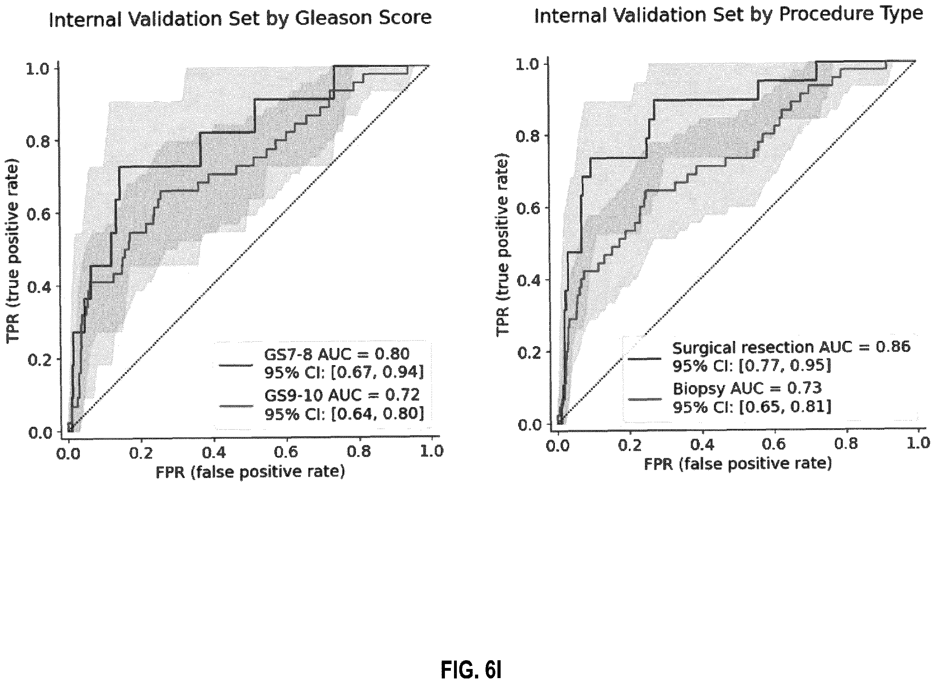

The present techniques may be used to develop and validate a machine learning-based histopathology slide predictor of MSI status using a cohort of real-world whole slide images and corresponding molecular testing results. FIG. 6A depicts a block diagram of an example patient data cohort 600, according to some aspects. FIG. 6B depicts an exemplary STARD diagram 610 of the patient data cohort 600, according to some aspects.

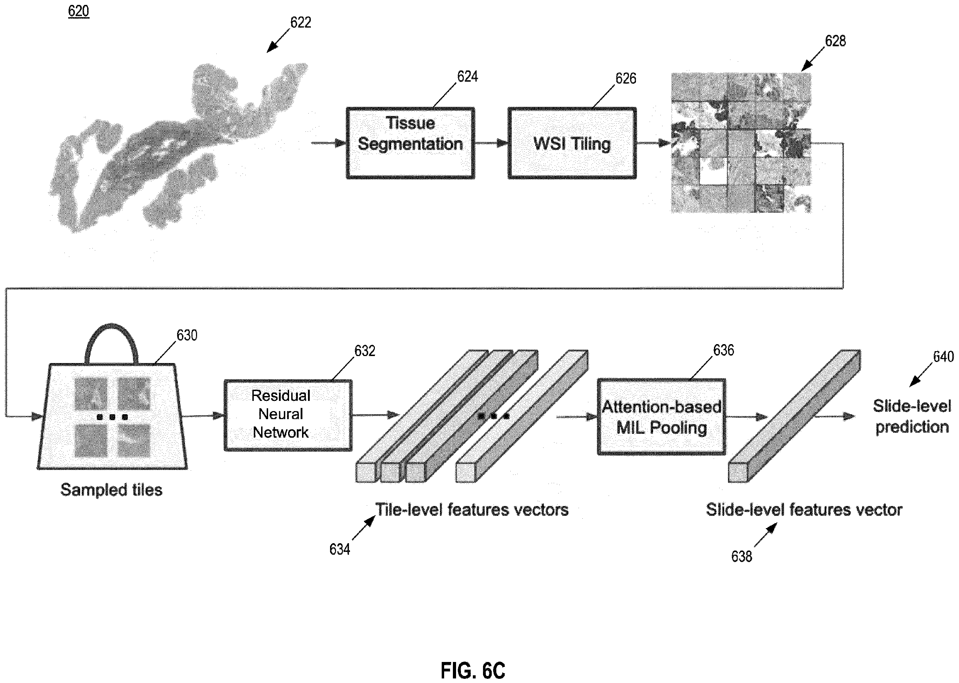

FIG. 6C depicts an exemplary block diagram of a method 620 for training and/or operating a histopathology slide predictor of MSI status, using the patient cohort data 600, according to some aspects. The histopathology slide predictor may be operated in a training or inference mode. The method 620 may include receiving a whole slide image (block 622), for example, corresponding to a sample of a patient in the patient data cohort 600. Herein "whole-slide images" refer to digital images.

In training mode, the method 620 may include receiving the whole-slide image at block 622 as one of a number (e.g., 3000) of images (e.g., H&E images). These images may be used to train a segmentation model (e.g., a U-net model) to perform tissue segmentation (block 624). The method 620 may include passing the segmented tissue to a subsequent block. For example, the method 622 may receive the segmented tissue image, and perform whole-slide image tiling of the segmented whole-slide image (block 626). For example, at block 626, tiles of a given size (e.g., 256x256 pixels at 20x magnification) may be generated from the tissue regions/segments. The method 620 may include excluding tiles with less than 80% area covered by tissue. The segmentation block 624 and tiling block 626 of the method 620 may together generate a respective tiled, segmented image (block 628) corresponding to each whole slide image received at block 622. The method 630 may collect these sampled tiles into a data structure (e.g., an array, a vector, a set, etc.) (block 630).

Next, in the training mode, the method 620 may train an artificial neural network (e.g., a residual network, such as ResNet18) (block 632) using the sampled tiles in the data structure to generate tile-level feature vectors from the sampled tiles via feature extraction (block 634). The method 620 may include processing the tile-level feature vectors using an attention-based MIL pooling module (block 636) to generate a slide-level feature vector (block 638). For example, the attention-based MIL pooling module may learn to identify tiles with high diagnostic relevance and aggregate information from all tiles in a bag (e.g., a subset of the training data tiles) to make a slide-level prediction (block 640), when operated in an inference mode.

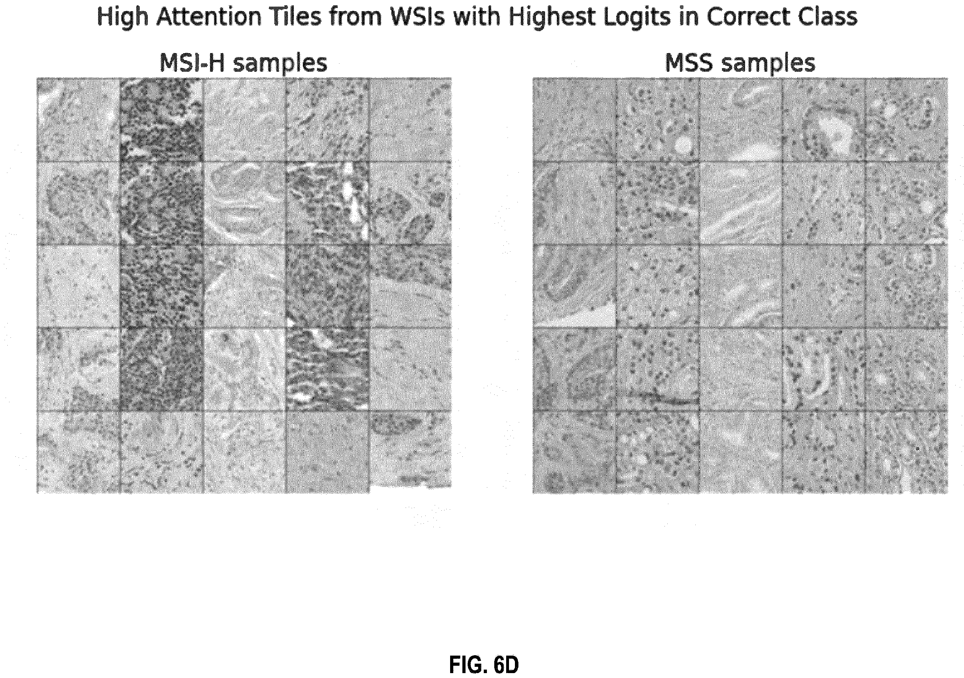

FIGs. 6D-6F depict tiles ranked according to importance in generating the prediction associated with the slide or tiles using the trained model, corresponding to both MSI-H samples and MSS samples. In each of FIGs. 6D-6F, tiles in each column are from the same whole-slide image.

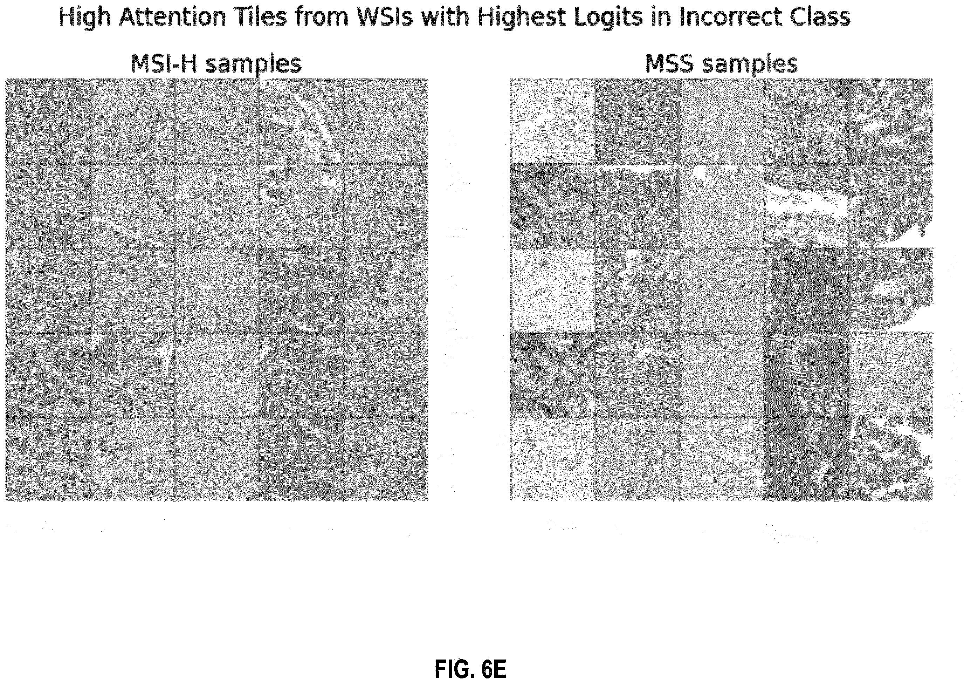

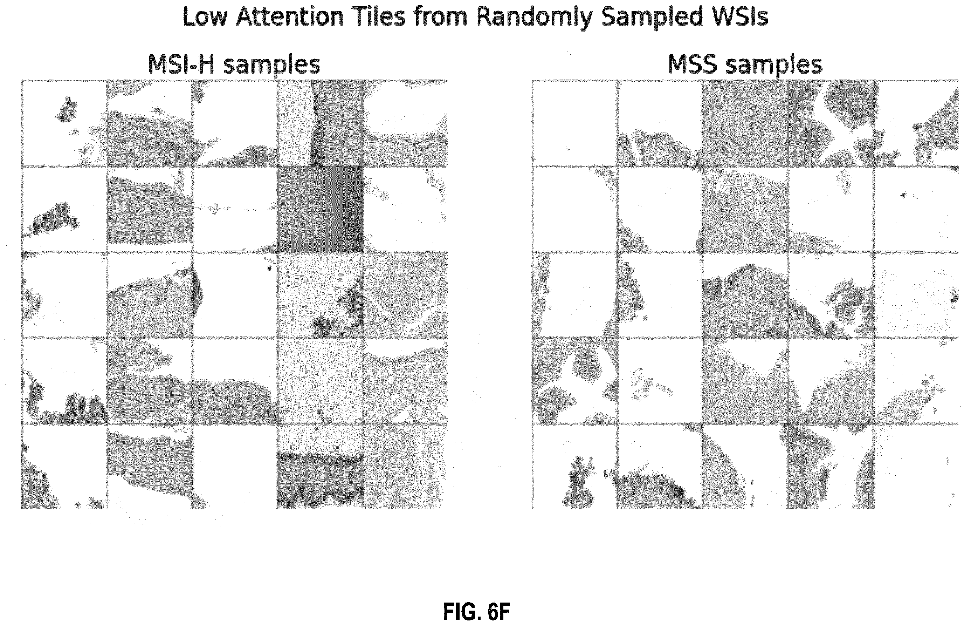

FIG. 6D depicts high attention tiles from whole-slide images having the highest logits in a correct class (e.g., indicating correct predictions at an output layer of the machine learning model), according to an aspect. Both MSI-H samples and MSS samples are depicted. FIG. 6E depicts high attention tiles from whole-slide images having the highest logits in an incorrect class (indicating incorrect predictions at an output layer of the machine learning model). FIG. 6F depicts low attention tiles from randomly-sampled whole slide images, according to an aspect. Thus, FIGs. 6D-6F depict high-attention tiles from whole-slide images that received the highest prediction scores from the MSI-H predictor in the correct class (i.e. true positive and true negative, in FIG. 6D), incorrect class (i.e., false positive and false negative, FIG. 6E), and low-attention tiles from randomly sampled whole-slide images (FIG. 6F).

The method 620 may train the residual network at block 632 and the attention module at block 636 using an optimizer (e.g., Adam optimizer) and a loss function (e.g., weighted cross-entropy loss) where weights are assigned according to class prevalence. In each epoch during training, the method 620 may randomly sample a number (e.g., 200) of tiles to form a bag. The effective batch size may be, for example, 32 during training, split across a number of GPUs (e.g., four NVIDIA A100 GPUs). At inference time, the method 620 may increase the bag size (e.g., to 1600) with a smaller batch size (e.g., 1 batch on one NVIDIA A100 GPU).

The method 620 may include normalizing tiles with mean and standard deviation information of a reference set of images (e.g., histopathology slide images such as H&E images). For data augmentation during training, the method 620 may randomly crop (e.g., to 224x224 pixels) tiles, randomly rotate tiles by multiples of 90 degrees, randomly flip tiles, and randomly apply tiles with color jittering.

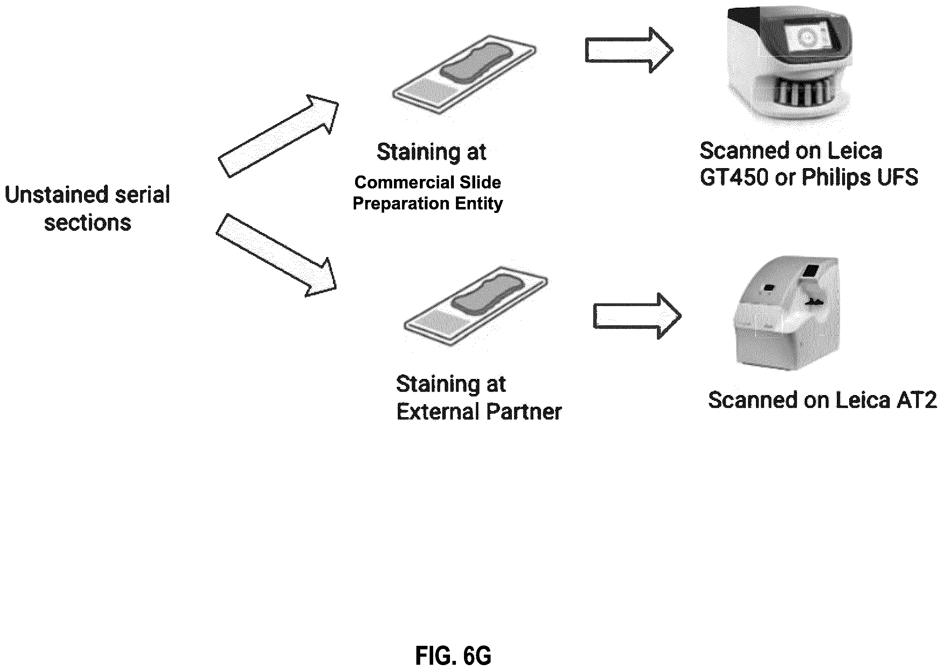

The method 620 may include validating the model and tuning its hyperparameters. For example, the method 620 may include performing five-fold cross-validation within the training set. This may include determining an optimal learning rate, a weight decay, a dropout rate, a patience and a minimum delta for early stopping, an input image magnification, and one or more color augmentation parameters. To create cross-validation folds, the method 620 may perform data splitting, by stratifying the training data according to MSI status, scanner type, procedure type, and Gleason score subgroups. After determining the hyperparameters, the present techniques may compose the MSI-H predictor by averaging the predictions across the five models trained via cross-validation using the selected hyperparameters. As shown in FIGs. 6G-61, the predictor may be evaluated on three validation sets: the paired validation set with enriched MSI-H prevalence composed of internally and externally stained and scanned serial sections for each sample, as well as on the temporal validation set to evaluate temporal generalizability.

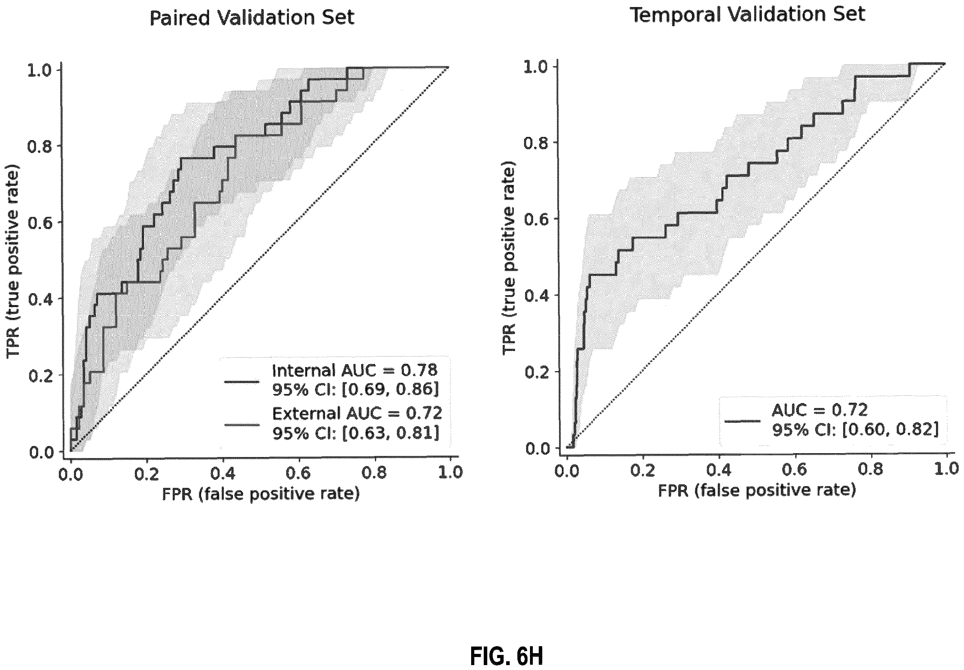

The histopathology slide-based predictor may be evaluated using area under receiver operating characteristic (AUC) to evaluate classification performance, as shown in FIG. 6H. Sensitivity, specificity, positive predictive value (PPV), and negative predictive value (NPV) may be reported to assess model performance at various target sensitivity levels, as shown in the following table:

**Table 1**

| Sensitivity | Specificity | PPV | NPV |
|---|---|---|---|
| 50% | 86.8% [59.9%, 95.7%] | 7.9% [2.7%, 23.2%] | 98.6% [97.9%, 99.1 %] |
| 70% | 57.5% [39.0%, 85.3%] | 3.8% [2.3%, 10.2%] | 98.8% [97.9%, 99.4%] |
| 90% | 26.9% [22.0%, 53.1%] | 2.8% [2.0%, 4.5%] | 99.2% [98.6%, 99.7%] |

R² may be used to evaluate a correlation between predictions on internally and externally stained and scanned images in the paired validation set. The 95% confidence intervals (CIs) of all metrics may be calculated by bootstrapping the prediction scores with a number (e.g., 1000) of bootstrap samples. The foregoing performance metrics are examples of comparing different thresholds/tolerance of irrelevant/artifact tiles included in the list of most important tiles. In some aspects, the method 620 may include retraining with a smaller number of "bad" tiles, and the performance of initially trained and retrained models can be compared. High-attention tiles from samples in the validation sets may be visualized to inspect regions that the model deemed important in making slide-level predictions. Pathologists may review randomly sampled high- and low-attention tiles for each class to identify prominent features.

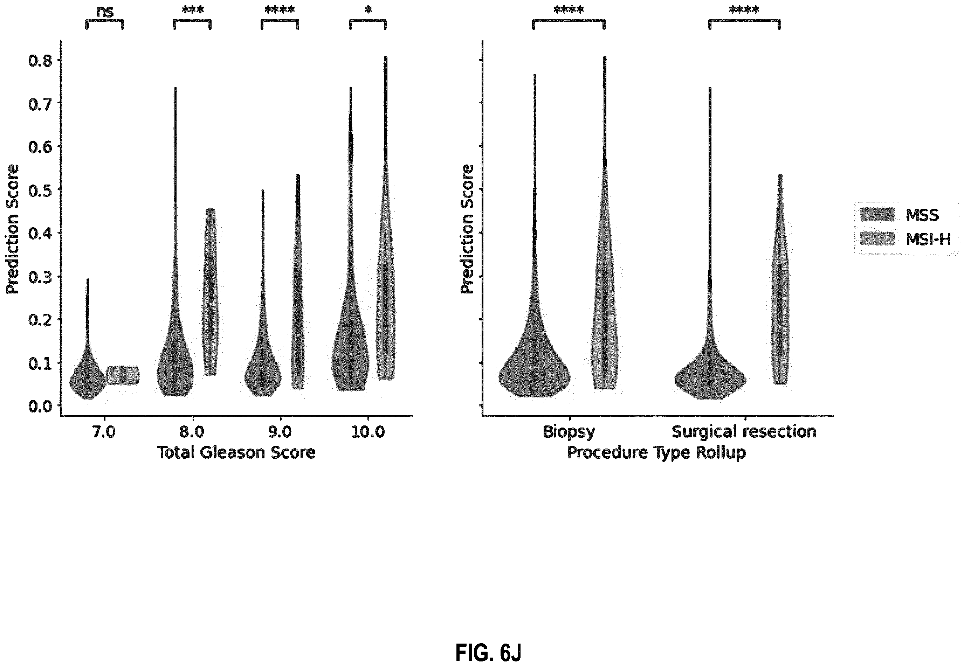

To assess the robustness of model performance across Gleason score and procedure type, subgroup analyses may be performed on the pooled internal validation set, which combined the temporal validation set and the internally stained and scanned slides from the paired validation set. The training set may be consecutively sub-sampled without replacement to 80%, 60%, 40%, and 20% of the original size, stratified by MSI status. A model was trained on each of these subsets using the same hyperparameters and configurations as the original model developed on the full training set, and model performance was analyzed to investigate the impact of sample size available for model development. For analyzing variable correlations with MSI status in the cohort characteristics tables, the Wilcoxon rank-sum test may be used for continuous variables, the Pearson's Chi-square test may be used for categorical variables when no expected cell count was less than five, and the Fisher test may be used for categorical variables when any expected cell count was less than five. The Mann-Whitney U test may be used to compare the prediction score distributions between MSI-H and MSS samples in the subgroup analysis. A p < 0.5 may be considered to indicate a statistically significant difference. Gleason score was significantly associated with MSI status, with higher Gleason scores reflecting greater MSI prevalence, ranging from 0.6% amongst Gleason 7 cases to 8.5% amongst Gleason 10 cases, as shown in FIG. 6J. MSI status was also significantly correlated with age, scanner, tumor mutational burden (TMB), prior androgen deprivation therapy (ADT), and sample collection year. No other significant correlations were found between MSI status and clinical or demographic variables.

As in the method 620, an attention-based multiple instance learning network may be trained on tiles randomly sampled from whole-slide image tissue regions (e.g., H&E histopathology slide images) to predict MSI-H. The MSI-H predictor achieved AUC values of 0.78 (95% Cl [0.69-0.86]), 0.72 (95% Cl [0.63-0.81]), and 0.72 (95% Cl [0.62-0.82]) on internally stained and scanned, externally stained and scanned, and temporal validation sets, respectively, as shown in FIG. 6H. Significant correlation between prediction scores on the paired internally and externally stained and scanned serial sections was observed (R² = 0.73, 95% Cl [0.60, 0.83]) as shown in FIG. 6H. At an example operating point of 50% sensitivity, the MSI-H predictor had a specificity of 86.8% (95% Cl [59.9%, 95.7%]), a PPV of 7.9% (95% Cl [2.7%, 23.2%]), and an NPV of 98.6% (95% Cl [97.9%, 99.1%]) on the temporal validation set, as shown in Table 1. The PPV is notably higher than the underlying MSI-H prevalence of 2.3%. A review of the high-attention tiles depicted in FIGs. 6D-6E suggests that the predictor focuses on dense tumor regions in making its determination, while its low-attention tiles largely comprise tiles with large regions of whitespace and stroma, as shown in FIG. 6F.

Performance was assessed in this example within subgroups on a pooled validation set combining the internally stained and scanned images in the paired validation and the temporal validation sets, as shown in FIG. 6G-6J. The ROC curves of FIGs. 6H-6I and the violin plots of prediction scores in FIG. 6J show that the model remained predictive of MSI-H status within each Gleason score and procedure type subgroup. AUC was higher in the Gleason scores 7-8 subgroup (AUC=0.80, 95% Cl [0.67, 0.94]), but in the Gleason scores 9-10 subgroup, where MSI-H prevalence is the highest, patients are classified as high-risk, and the need for therapy is often significant, the AUC was also promising (AUC=0.72, 95% Cl [0.64, 0.81]), and the distributions of prediction scores for MSI-H and MSS patients were significantly different. Performance within surgical resections trended higher than within biopsies (AUC=0.86, 95% Cl [0.77, 0.95] vs. AUC=0.73, 95% Cl [0.65, 0.81]), and the distributions of prediction scores for MSI-H and MSS patients were significantly different in both subgroups. Subgroup analysis within each validation set shows qualitatively similar trends but did not have adequate statistical power to assess significance in several subgroups owing to smaller sample sizes. A data titration experiment showed that model performance on the validation sets increased as a larger fraction of training data was used.

Thus, the present techniques may include an H&E-based predictor of MSI status that uses a large real-world cohort of whole slide images and corresponding molecular testing results, as discussed with respect to the method 620. The generalizability of this method to externally stained and scanned slides and to a temporally independent validation cohort may be evaluated. The method 620 achieved high performance for a screening algorithm and demonstrated significant discriminative ability on both externally stained and scanned images and the temporal validation set. Given the effectiveness and generalizability of the method 620, the ubiquity of H&E slides in prostate cancer diagnoses, the increasing digitization of H&E slides, and the lack of routine testing for MSI in prostate cancer, it is anticipated that machine learning models for H&E whole slide images could be used to direct testing and find patients eligible for targeted therapies who otherwise may have been missed. Advantageously, the present techniques make better use of existing data that is not being utilized, to improve patient outcomes by more accurate identification.

It should be appreciated that other histopathology slide types may be used in addition to/ alternatively from H&E slide images. For example, alternatives to Hematoxylin and Eosin (H&E) staining in histopathology slide images include a variety of staining techniques and imaging methods that cater to different diagnostic needs. Immunohistochemistry (IHC) staining is widely used to detect specific antigens in the tissues, allowing for the identification of various types of cancer cells and infectious agents. Periodic Acid-Schiff (PAS) staining helps in identifying glycogen, mucosubstances, and fungal organisms, making it particularly useful in diagnosing fungal infections and certain glycogen storage diseases. Masson's Trichrome staining is another alternative, which is employed to differentiate between muscle, collagen, and cytoplasm, thus aiding in the diagnosis of fibrosis and muscle diseases. Silver staining is useful for detecting reticular fibers, nerve fibers, and certain bacteria, offering high sensitivity in identifying organisms like Helicobacter pylori. Toluidine Blue staining is utilized for highlighting mast cells, while Congo Red is applied for the detection of amyloid deposits in tissues, crucial for diagnosing amyloidosis. Fluorescent in situ hybridization (FISH) provides a more advanced alternative, enabling the visualization of genetic abnormalities within the cells. Lastly, digital pathology and whole slide imaging (WSI) represent technological advancements in histopathology, allowing for the digitization of slides and enabling detailed analysis through computer algorithms, enhancing diagnostic accuracy and efficiency. These alternatives, each with their specific applications, complement H&E staining by providing additional or more detailed diagnostic information. Any number of these alternatives may be used with the present techniques.

For patients determined to be MSI-H via confirmatory testing, the clinical implications are significant, including potential eligibility to receive pembrolizumab, which has a tumor-agnostic indication in MSI/MMRd tumors and reported response rates of 25-60%.3,5-7 Other immunotherapies may also be effective, with evidence of encouraging response rates to nivolumab, a PD-1 inhibitor in a Phase II clinical trial.

Subgroup analyses showed that the present modeling techniques remained predictive within Gleason score subgroups, including scores of 9-10 where the impact of this algorithm may be the greatest. Patients exhibiting Gleason score 9-10 (Grade Group 5) have significantly worse prognosis than other prostate cancer patients, 19 are minimally considered stage IIIC independent of metastatic status, and correspondingly tend to receive aggressive treatment including hormonal and radiation therapy. The underlying MSI-H prevalence is also greatest amongst these patients in our study; similar associations have been noted in other studies, with Guedes et al finding MSH2 prevalence significantly associated with the presence of Gleason pattern 5. While MSI-H has been associated with favorable prognosis in other cancer types, the prognostic significance of MSI in high Gleason score prostate cancer is not yet fully understood, and treatment selection for these patients remains a significant need. Given the greater underlying prevalence and significant clinical need for treatment in high-grade prostate cancers, we anticipate the predictor's utility and urgency of MSI-H confirmatory testing may be the greatest in this subgroup.

Germline mutations in MMR genes were detected in 5 of 138 (3.6%) MSI-H cases, indicating Lynch syndrome, a predisposition to significantly elevated lifetime cancer risk. The clinical value of MSI-H detection in these cases may extend beyond treatment selections in the patients themselves, but also to directing germline testing and surveillance protocols for their families for heritable cancer predisposition syndrome.

As expected, model performance was highest on the internally stained and scanned slides in the paired validation set, and the performance drop on the externally stained and scanned slides could be attributed to differences in staining and scanning protocols, which is a well-known challenge for the generalizability of deep learning algorithms in digital pathology. Additionally, although all patients in an example cohort were sequenced using proprietary techniques, 37% of H&E slides were prepared externally at other laboratories using different staining protocols and scanners, mimicking diverse data in a multi-institutional study and adding confidence as to the generalizability of the present machine learning models, which was further supported by the fairly consistent performance on the internally and externally prepared slides in the paired validation set. The performance drop on the temporally independent validation set could be attributed to temporal drift in data distribution, for which the significant association between sample collection year and MSI status provides partial evidence, and in the color space of H&E slides as staining and scanning techniques evolved over time. Subgroup analyses showed that model performance within surgical resections trended higher than within biopsies, potentially owing to larger tissue context and reduced frequency of biopsy-related artifacts.

### Exemplary Aspects

The various embodiments described above can be combined to provide further embodiments. All U.S. patents, U.S. patent application publications, U.S. patent application, foreign patents, foreign patent application and non-patent publications referred to in this specification and/or listed in the Application Data Sheet are incorporated herein by reference, in their entirety. Aspects of the embodiments can be modified if necessary to employ concepts of the various patents, applications, and publications to provide yet further embodiments.

These and other changes can be made to the embodiments in light of the above-detailed description. In general, in the following claims, the terms used should not be construed to limit the claims to the specific embodiments disclosed in the specification and the claims but should be construed to include all possible embodiments along with the full scope of equivalents to which such claims are entitled. Accordingly, the claims are not limited by the disclosure.

Aspects of the techniques described in the present disclosure may include any of the following aspects, either alone or in combination:
1. A computer-implemented method of performing quality control prediction technique for a whole-slide image, comprising: receiving, via one or more processors, the whole-slide image, wherein the whole-slide image is subdivided into a grid including a plurality of image tiles; processing, via one or more processors, the whole-slide image using a trained machine learning model to generate a prediction based on the plurality of image tiles; determining, based on an artificial neural network, a respective attention score for each of the plurality of image tiles; generating a pass/fail indication corresponding to the prediction by selecting a subset of the plurality of image tiles based on the respective attention score of each of the subset of the plurality of image tiles; and processing the selected subset of image tiles to determine their biological relevance to the prediction.
2. The computer-implemented method of aspect 1, further comprising:
   processing the whole-slide image using a secondary machine learning model to generate an additional characteristic for each of the plurality of image tiles, wherein the additional characteristic provides a quantitative score or classification for each tile, and wherein the pass/fail indication is further based on a thresholding of the additional characteristic.
3. The computer-implemented method of any of aspects 1-2, wherein the prediction passes quality control when the subset of the plurality of image tiles pass one or more predetermined characteristics for inclusion.
4. The computer-implemented method of any of aspects 1-3, wherein the prediction fails quality control when the subset of the plurality of image tiles fail one or more predetermined characteristics for inclusion.
5. The computer-implemented method of any of aspects 1-4, wherein processing the selected subset of image tiles to determine their biological relevance to the prediction includes excluding tiles based on a presence of artifacts.
6. The computer-implemented method of any of aspects 1-5, wherein processing the selected subset of image tiles to determine their biological relevance to the prediction includes evaluating one or more features indicative of tumor presence or absence.
7. The computer-implemented method of any of aspects 1-6, further comprising: determining, via one or more processors, whether the plurality of image tiles include at least one of a biomarker, a tumor, or a specific cancer, a cell type, density of stroma, presence of immune cells, stain characteristics (over staining or under staining), perineural invasion, or another biological characteristic that informs reliability of the prediction.
8. The computer-implemented method of any of aspects 1-7, wherein the artificial neural network includes at least one of (i) an attention network, (ii) a contribution network, (iii) a multi-instance learning network, or (ii) an additive multi-instance learning network.
9. The computer-implemented method of any of aspects 1-8, further comprising: training, via one or more processors, the artificial neural network using feedback from a reviewer.
10. The computer-implemented method of aspect 9, wherein the reviewer is implemented as a machine learning model.
11. The computer-implemented method of any of aspects 1-10, further comprising: scoring the plurality of image tiles based on attention scores using the artificial neural network, wherein tiles with higher attention scores are prioritized for further analysis.
12. The computer-implemented method of aspect 11, further comprising: scoring the prioritized image tiles using a secondary model to assess content relevance, wherein tiles with low scores for artifacts and higher scores for biologically relevant content, including tumor tissue, are selected for generating the prediction.
13. The computer-implemented method of any of aspects 12, wherein the secondary model is trained to differentiate between artifacts, non-tumor biological content, and tumor tissue based on features extracted from the image tiles.
14. The computer-implemented method of any of aspects 12-13, wherein the prediction is adjusted based on the scores from the secondary model to enhance an accuracy of the prediction by emphasizing biologically relevant content over artifacts.
15. The computer-implemented method of any of aspects 12-14, wherein the prediction is considered more reliable when a majority of the selected image tiles are scored highly for tumor tissue content by the secondary model.
16. The computer-implemented method of any of aspects 12-15, further comprising: further training the artificial neural network based on feedback from the secondary model to improve the selecting of image tiles for quality control analysis.
17. The computer-implemented method of any of aspects 12-16, wherein the prediction is considered more reliable when a majority of the subset of the plurality of image tiles are scored highly for tumor tissue content by the secondary model.
18. The computer-implemented method of any of aspects 1-17, further comprising: integrating the pass/fail indication with a clinician workflow to inform subsequent diagnostic or treatment decisions, wherein the integration includes automatically updating patient records with the pass/fail indication and associated prediction details.
19. The computer-implemented method of any of aspects 1-18, further comprising: retraining or fine-tuning the trained machine learning model based on outcomes of the pass/fail indication to improve prediction accuracy for future whole-slide image analyses.
20. The computer-implemented method of aspect 19, wherein the retraining includes incorporating feedback on the pass/fail indication from clinicians to identify and correct prediction errors related to specific biological characteristics or artifacts.
21. The computer-implemented method of any of aspects 1-20, further comprising: classifying the image tiles into high-attention tiles and low-attention tiles based on the respective scores, wherein the high-attention tiles are subjected to manual review by a reviewer to confirm the pass/fail indication.
22. The computer-implemented method of any of aspects 1-21, further comprising: re-running the prediction for the whole-slide image while excluding high-attention tiles identified as artifacts to enhance accuracy of the prediction.
23. The computer-implemented method of any of aspects 1-22, further comprising: determining, via one or more processors, a tumor percentage for the whole-slide image based on a number of pixels identified as containing tumor tissue divided by a total number of pixels containing tissue; wherein the pass/fail indication is further based on a thresholding of the tumor percentage.
24. The computer-implemented method of aspect 23, wherein the tumor percentage is determined by aggregating scores from the subset of the plurality of image tiles reviewed, and wherein a tile is classified as containing tumor tissue based on a score exceeding a predetermined threshold.
25. The computer-implemented method of any of aspects 1-24, further comprising: applying qualitative criteria to each of the image tiles reviewed to determine a presence of tumor tissue, artifacts, or other biological characteristics that inform a reliability of the prediction.
26. The computer-implemented method of aspect 25, wherein the pass/fail indication fails when a predetermined percentage of the reviewed image tiles are removed based on the qualitative criteria indicating the presence of artifacts or lack of relevant biological content.
27. The computer-implemented method of any of aspects 25-26, wherein the qualitative criteria include the presence of surgical ink, smudges, or other artifacts that could affect the reliability of the prediction.
28. The computer-implemented method of any of aspects 25-27, further comprising: adjusting the training of the artificial neural network based on the qualitative criteria applied to the reviewed image tiles to improve an accuracy of future predictions by reducing an influence of artifacts.
29. The computer-implemented method of any of aspects 1-28, wherein the artificial neural network is further trained to prioritize image tiles based on biological relevance over a presence of artifacts, thereby enhancing a specificity of the prediction.
30. The computer-implemented method of any of aspects 25-29, further comprising: integrating feedback from the pass/fail indication and the qualitative criteria into the training of the artificial neural network to refine the selection and scoring of image tiles for quality control analysis.
31. The computer-implemented method of any of aspects 1-30, further comprising: generating a report that includes a subset of tiles each having a high respective attention score without providing a pass/fail indication, to enable a clinician to make a determination based on the subset of tiles.
32. The computer-implemented method of any of aspect 31, wherein the report includes qualitative and quantitative data associated with the subset of tiles to facilitate the clinician's determination.
33. The computer-implemented method of any of aspects 31-32, further comprising: receiving the determination of the clinician; and retraining the artificial neural network to improve future predictions using the determination of the clinician.
34. The computer-implemented method aspect 33, wherein the retraining includes integrating feedback from the clinician's determination into the training of the artificial neural network to refine the selection and scoring of image tiles for quality control analysis.
35. The computer-implemented method of any of aspects 31-34, wherein the report further includes a summary of biological characteristics identified within the subset of tiles, to aid the clinician in making the determination.
36. The computer-implemented method of any of aspects 31-35, further comprising: updating one or more patient records with details of the clinician's determination and associated highest attention tiles.
37. A computing system for performing quality control prediction technique for a whole-slide image , comprising: one or more processors; and a memory having stored thereon instructions that, when executed by the one or more processors, cause the computing system to: receive the whole-slide image, wherein the whole-slide image is subdivided into a grid including a plurality of image tiles; process the whole-slide image using a trained machine learning model to generate a prediction based on the plurality of image tiles; determine, based on an artificial neural network, a respective attention score for each of the plurality of image tiles; generate a pass/fail indication corresponding to the prediction by selecting a subset of the plurality of image tiles based on the respective attention score of each of the subset of the plurality of image tiles; and process the selected subset of image tiles to determine their biological relevance to the prediction.
38. A non-transitory computer-readable medium containing program instructions that when executed by one or more processors, cause a computer to: receive a whole-slide image, wherein the whole-slide image is subdivided into a grid including a plurality of image tiles; process the whole-slide image using a trained machine learning model to generate a prediction based on the plurality of image tiles; determine, based on an artificial neural network, a respective attention score for each of the plurality of image tiles; generate a pass/fail indication corresponding to the prediction by selecting a subset of the plurality of image tiles based on the respective attention score of each of the subset of the plurality of image tiles; and process the selected subset of image tiles to determine their biological relevance to the prediction.

### ADDITIONAL CONSIDERATIONS

The present techniques are generally applicable to any task using a multiple instance learning model. For example, the present techniques are applicable to techniques where whole slide images are analyzed for bits of tissue that are shared across multiple samples and/or all indicative of the same underlying molecular operation. However, in addition to histopathology, the present techniques are also applicable to cellular analysis (e.g., single cell genomics), other imaging domains, immunohistochemistry, special transfer atomics, radiology, etc.

The computer-readable media may include executable computer-readable code stored thereon for programming a computer (e.g., comprising a processor(s) and GPU(s)) to the techniques herein. Examples of such computer-readable storage media include a hard disk, a CD-ROM, digital versatile disks (DVDs), an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. More generally, the processing units of the computing device 1300 may represent a CPU-type processing unit, a GPU-type processing unit, a TPU-type processing unit, a field-programmable gate array (FPGA), another class of digital signal processor (DSP), or other hardware logic components that can be driven by a CPU.

It is noted that while example deep learning frameworks herein have been described as configured with example machine learning architectures (FCN configurations), any number of suitable convolutional neural network architectures may be used. Broadly speaking, the deep learning frameworks herein may implement any suitable statistical model (e.g., a neural network or other model implemented through a machine learning process) that will be applied to each of the received images. As discussed herein, that statistical model may be implemented in a variety of manners. In some examples, machine learning is used to evaluate training images and develop classifiers that correlate predetermined image features to specific categories of TILs status. In some examples, image features can be identified as training classifiers using a learning algorithm such as Neural Network, Support Vector Machine (SVM) or other machine learning process. Once classifiers within the statistical model are adequately trained with a series of training images, the statistical model may be employed in real time to analyze subsequent images provided as input to the statistical model for predicting biomarker status. In some examples, when a statistical model is implemented using a neural network, the neural network may be configured in a variety of ways. In some examples, the neural network may be a deep neural network and/or a convolutional neural network. In some examples, the neural network can be a distributed and scalable neural network. The neural network may be customized in a variety of manners, including providing a specific top layer such as but not limited to a logistics regression top layer. A convolutional neural network can be considered as a neural network that contains sets of nodes with tied parameters. A deep convolutional neural network can be considered as having a stacked structure with a plurality of layers. The neural network or other machine learning processes may include many different sizes, numbers of layers and levels of connectedness. Some layers can correspond to stacked convolutional layers (optionally followed by contrast normalization and max-pooling) followed by one or more fully-connected layers. For neural networks trained by large datasets, the number of layers and layer size can be increased by using dropout to address the potential problem of overfitting. In some instances, a neural network can be designed to forego the use of fully connected upper layers at the top of the network. By forcing the network to go through dimensionality reduction in middle layers, a neural network model can be designed that is quite deep, while dramatically reducing the number of learned parameters.

A system for performing the methods described herein may include a computing device, and more particularly may be implemented on one or more processing units, for example, Central Processing Units (CPUs), and/or on one or more or Graphical Processing Units (GPUs), including clusters of CPUs and/or GPUs. Features and functions described may be stored on and implemented from one or more non-transitory computer-readable media of the computing device. The computer-readable media may include, for example, an operating system and software modules, or "engines," that implement the methods described herein. More generally, the computer-readable media may store batch normalization process instructions for the engines for implementing the techniques herein. The computing device may be a distributed computing system, such as an Amazon Web Services cloud computing solution.

The computing device includes a network interface communicatively coupled to network, for communicating to and/or from a portable personal computer, smart phone, electronic document, tablet, and/or desktop personal computer, or other computing devices. The computing device further includes an I/O interface connected to devices, such as digital displays, user input devices, etc.

The functions of the engines may be implemented across distributed computing devices, etc. connected to one another through a communication link. In other examples, functionality of the system may be distributed across any number of devices, including the portable personal computer, smart phone, electronic document, tablet, and desktop personal computer devices shown. The computing device may be communicatively coupled to the network and another network. The networks may be public networks such as the Internet, a private network such as that of a research institution or a corporation, or any combination thereof. Networks can include, local area network (LAN), wide area network (WAN), cellular, satellite, or other network infrastructure, whether wireless or wired. The networks can utilize communications protocols, including packet-based and/or datagram-based protocols such as Internet protocol (IP), transmission control protocol (TCP), user datagram protocol (UDP), or other types of protocols. Moreover, the networks can include a number of devices that facilitate network communications and/or form a hardware basis for the networks, such as switches, routers, gateways, access points (such as a wireless access point as shown), firewalls, base stations, repeaters, backbone devices, etc.

The computer-readable media may include executable computer-readable code stored thereon for programming a computer (for example, comprising a processor(s) and GPU(s)) to the techniques herein. Examples of such computer-readable storage media include a hard disk, a CD-ROM, digital versatile disks (DVDs), an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. More generally, the processing units of the computing device may represent a CPU-type processing unit, a GPU-type processing unit, a field-programmable gate array (FPGA), another class of digital signal processor (DSP), or other hardware logic components that can be driven by a CPU.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components or multiple components.

Additionally, certain aspects are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example aspects, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various aspects, a hardware module may be implemented mechanically or electronically. For example, a hardware module may comprise dedicated circuitry or logic that is permanently configured (e.g., as a special-purpose processor, such as a microcontroller, field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. Considering aspects in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connects the hardware modules. In aspects in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of the example methods described herein can be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example aspects, comprise processor-implemented modules.

Similarly, the methods or routines described herein may be at least partially processor-implemented. For example, at least some of the operations of a method can be performed by one or more processors or processor-implemented hardware modules. The performance of certain of the operations may be distributed among the one or more processors, not only residing within a single machine, but also deployed across a number of machines. In some example aspects, the processor or processors may be located in a single location (e.g., within a home environment, an office environment or as a server farm), while in other aspects the processors may be distributed across a number of locations.

The performance of certain of the operations may be distributed among the one or more processors, not only residing within a single machine, but also deployed across a number of machines. In some example aspects, the one or more processors or processor-implemented modules may be located in a single geographic location (e.g., within a home environment, an office environment, or a server farm). In other example aspects, the one or more processors or processor-implemented modules may be distributed across a number of geographic locations.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one aspect" or "an aspect" means that a particular element, feature, structure, or characteristic described in connection with the aspect is included in at least one aspect. The appearances of the phrase "in one aspect" in various places in the specification are not necessarily all referring to the same aspect.

Some aspects may be described using the expression "coupled" and "connected" along with their derivatives. For example, some aspects may be described using the term "coupled" to indicate that two or more elements are in direct physical or electrical contact. The term "coupled," however, may also mean that two or more elements are not in direct contact with each other, but yet still co-operate or interact with each other. The aspects are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the aspects herein. This is done merely for convenience and to give a general sense of the description. This description, and the claims that follow, should be read to include one or at least one and the singular also includes the plural unless it is obvious that it is meant otherwise.

This detailed description is to be construed as an example only and does not describe every possible aspect, as describing every possible aspect would be impractical, if not impossible. One could implement numerous alternate aspects, using either current technology or technology developed after the filing date of this application.

## Claims

1. A computer-implemented method of performing quality control prediction technique for a whole-slide image, comprising:
receiving, via one or more processors, the whole-slide image, wherein the whole-slide image is subdivided into a grid including a plurality of image tiles;
processing, via one or more processors, the whole-slide image using a trained machine learning model to generate a prediction based on the plurality of image tiles;
determining, based on an artificial neural network, a respective attention score for each of the plurality of image tiles;
generating a pass/fail indication corresponding to the prediction by selecting a subset of the plurality of image tiles based on the respective attention score of each of the subset of the plurality of image tiles; and
processing the selected subset of image tiles to determine their biological relevance to the prediction.

2. The computer-implemented method of claim 1, further comprising:
processing the whole-slide image using a secondary machine learning model to generate an additional characteristic for each of the plurality of image tiles,
wherein the additional characteristic provides a quantitative score or classification for each tile, and
wherein the pass/fail indication is further based on a thresholding of the additional characteristic.

3. The computer-implemented method of any of claims 1-2, further comprising:
determining, via one or more processors, whether the plurality of image tiles include at least one of a biomarker, a tumor, or a specific cancer, a cell type, density of stroma, presence of immune cells, stain characteristics (over staining or under staining), perineural invasion, or another biological characteristic that informs reliability of the prediction.

4. The computer-implemented method of any of claims 1-3, wherein the artificial neural network includes at least one of (i) an attention network, (ii) a contribution network, (iii) a multi-instance learning network, or (ii) an additive multi-instance learning network.

5. The computer-implemented method of any of claims 1-4, further comprising:
training, via one or more processors, the artificial neural network using feedback from a reviewer.

6. The computer-implemented method of any of claims 1-5, further comprising:
scoring the plurality of image tiles based on attention scores using the artificial neural network, wherein tiles with higher attention scores are prioritized for further analysis.

7. The computer-implemented method of claim 6, further comprising:
scoring the prioritized image tiles using a secondary model to assess content relevance, wherein tiles with low scores for artifacts and higher scores for biologically relevant content, including tumor tissue, are selected for generating the prediction.

8. The computer-implemented method of claim 7, wherein the secondary model is trained to differentiate between artifacts, non-tumor biological content, and tumor tissue based on features extracted from the image tiles.

9. The computer-implemented method of any of claims 1-8, further comprising:
integrating the pass/fail indication with a clinician workflow to inform subsequent diagnostic or treatment decisions, wherein the integration includes automatically updating patient records with the pass/fail indication and associated prediction details.

10. The computer-implemented method of any of claims 1-9, further comprising:
retraining or fine-tuning the trained machine learning model based on outcomes of the pass/fail indication to improve prediction accuracy for future whole-slide image analyses.

11. The computer-implemented method of any of claims 1-10, further comprising:
re-running the prediction for the whole-slide image while excluding high-attention tiles identified as artifacts to enhance accuracy of the prediction.

12. The computer-implemented method of any of claims 1-11, further comprising:
applying qualitative criteria to each of the image tiles reviewed to determine a presence of tumor tissue, artifacts, or other biological characteristics that inform a reliability of the prediction.

13. The computer-implemented method of any of claims 1-12, further comprising:
generating a report that includes a subset of tiles each having a high respective attention score without providing a pass/fail indication, to enable a clinician to make a determination based on the subset of tiles.

14. A computing system for performing quality control prediction technique for a whole-slide image , comprising:
one or more processors; and
a memory having stored thereon instructions that, when executed by the one or more processors, cause the computing system to:
receive the whole-slide image, wherein the whole-slide image is subdivided into a grid including a plurality of image tiles;
process the whole-slide image using a trained machine learning model to generate a prediction based on the plurality of image tiles;
determine, based on an artificial neural network, a respective attention score for each of the plurality of image tiles;
generate a pass/fail indication corresponding to the prediction by selecting a subset of the plurality of image tiles based on the respective attention score of each of the subset of the plurality of image tiles; and
process the selected subset of image tiles to determine their biological relevance to the prediction.

15. A non-transitory computer-readable medium containing program instructions that when executed by one or more processors, cause a computer to:
receive a whole-slide image, wherein the whole-slide image is subdivided into a grid including a plurality of image tiles;
process the whole-slide image using a trained machine learning model to generate a prediction based on the plurality of image tiles;
determine, based on an artificial neural network, a respective attention score for each of the plurality of image tiles;
generate a pass/fail indication corresponding to the prediction by selecting a subset of the plurality of image tiles based on the respective attention score of each of the subset of the plurality of image tiles; and
process the selected subset of image tiles to determine their biological relevance to the prediction.
